# EUROPEAN PATENT APPLICATION

(11) **EP 4 586 632 A1**
(43) Date of publication of application: **16.07.2025**
(21) Application number: 23869724.7
(22) Date of filing: 09.06.2023
(51) Int. Cl.: H04N 25/60

(54) **IMAGE SENSOR CIRCUIT, IMAGE SENSOR CHIP, AND CAMERA DEVICE**

(30) Priority: 29.09.2022 CN 202211204098
(71) Applicant: Huawei Technologies Co., Ltd., Shenzhen, Guangdong 518129 (CN)
(72) Inventor: DENG, Zhipeng, Shenzhen, Guangdong 518129 (CN); LI, Yang, Shenzhen, Guangdong 518129 (CN); PAN, Han, Shenzhen, Guangdong 518129 (CN); HU, Hui, Shenzhen, Guangdong 518129 (CN)
(74) Representative: Körber, Martin Hans
(86) International application number: PCT/CN2023/099536
(87) International publication number: WO 2024/066475

(57) **Abstract**

An image sensor circuit, an image sensor chip, and a camera device are used in the field of sensor technologies, to resolve a problem that an automatic conversion gain determining mechanism in an existing image sensor easily causes crosstalk to a voltage on a column bus coupled to a pixel unit. In the image sensor circuit, a conversion gain selection circuit is disposed between each column bus of a double conversion gain pixel array and a corresponding analog-to-digital converter. After a floating diffusion node in a pixel unit is reset, the conversion gain selection circuit separately receives voltages output by the pixel unit in a high conversion gain mode and a low conversion gain mode. Then, after a photodiode in the pixel unit transfers a photo-generated electron to the floating diffusion node, a proper gain mode under a present incident light intensity is determined based on the voltage output by the pixel unit in the high conversion gain mode or the low conversion gain mode and a given reference voltage, and a corresponding voltage value is output for subsequent image processing.

## Description

This application claims priority to Chinese Patent Application No. 202211204098.3, filed with the China National Intellectual Property Administration on September 29, 2022, and entitled "IMAGE SENSOR CIRCUIT, IMAGE SENSOR CHIP, AND CAMERA DEVICE", which is incorporated herein by reference in its entirety.

### TECHNICAL FIELD

This application relates to the field of sensor technologies, and in particular, to an image sensor circuit, an image sensor chip, and a camera device.

### BACKGROUND

Currently, two solutions are usually adopted for a common complementary metal oxide semiconductor (complementary metal oxide semiconductor, CMOS) image sensor to obtain images with a high dynamic range (high dynamic range, HDR). A first solution is to perform long and short exposure (that is, exposure time is classified into long time and short time) on a photodiode when a capacitance of a floating diffusion (floating diffusion, FD) potential point is fixed, so that quantities of generated photo-generated electrons are different, and an FD generates different voltages. A second solution is single exposure. A capacitance value of an FD point is changed, so that a same quantity of photo-generated electrons is used to generate different voltages. Currently, a single exposure manner is widely used. However, in the single exposure solution, a feedback line needs to be added to an automatic conversion gain determining mechanism currently introduced. This easily causes crosstalk to a voltage on a column bus.

### SUMMARY

An objective of embodiments of this application is to provide an image sensor circuit, an image sensor chip, and a camera device, to resolve a problem that an automatic conversion gain determining mechanism in an existing image sensor easily causes crosstalk to a voltage on a column bus coupled to a pixel unit.

To achieve the foregoing objective, implementation solutions provided in embodiments of this application are as follows:
According to a first aspect, an image sensor circuit is provided. The image sensor circuit includes a driver and a pixel array. The pixel array includes a plurality of pixel units that are coupled to the driver and that have two conversion gain modes. In addition, the image sensor circuit further includes a plurality of conversion gain selection circuits. Pixel units in a same column of the pixel array are coupled to the conversion gain selection circuit through a column bus. The driver is configured to drive the pixel unit to output a plurality of voltage signals in the two conversion gain modes. The conversion gain selection circuit is configured to output one analog signal and one digital signal based on the plurality of voltage signals. The digital signal indicates a conversion gain mode of the pixel unit, and the analog signal represents an output voltage corresponding to the conversion gain mode. In this manner, the conversion gain selection circuit may directly select a conversion gain mode under a present incident light intensity based on a voltage output by the column bus connected to the pixel unit, without disposing an additional feedback line. This does not cause crosstalk to the voltage on the column bus.

In a possible implementation, the pixel unit includes a photodiode, and a floating diffusion node coupled to the photodiode through a switch. The driver may first input a low level to the switch, and drive the pixel unit to output a first voltage signal in a low conversion gain and output a second voltage signal in a high conversion gain mode. Then, the driver inputs a high level to the switch, and drives the pixel unit to output a third voltage signal in the high conversion gain mode and output a fourth voltage signal in the low conversion gain mode. The conversion gain selection circuit outputs a first analog signal and a first digital signal, or outputs a second analog signal and a second digital signal. The first analog signal is obtained by subtracting the third voltage signal from the second voltage signal, and the second analog signal is obtained by subtracting the fourth voltage signal from the first voltage signal. The first digital signal and the second digital signal are obtained by comparing the third voltage signal with a first reference voltage, or the first digital signal and the second digital signal are obtained by comparing the fourth voltage signal with a second reference voltage. Levels of the first digital signal and the second digital signal are opposite. Based on this, the pixel circuit may separately output voltage signals in the two conversion gain modes when the switch is in an on state and an off state, and the conversion gain selection circuit may directly select a proper conversion gain mode based on the received voltage signal, and output a corresponding analog signal for subsequent processing, without providing feedback to the pixel unit.

In a possible implementation, the conversion gain selection circuit includes a first output port, a second output port, a correlated double sampling circuit, a determining circuit, and a control circuit. Both an input end of the correlated double sampling circuit and an input end of the determining circuit are coupled to the column bus, an output end of the correlated double sampling circuit is coupled to the first output port, an output end of the determining circuit is separately coupled to the second output port and an input end of the control circuit, and the correlated double sampling circuit is further coupled to an output end of the control circuit. The correlated double sampling circuit is configured to receive the first voltage signal and the second voltage signal. The determining circuit is configured to: receive the third voltage signal and the first reference voltage, and output the first digital signal or the second digital signal; or the determining circuit is further configured to: receive the fourth voltage signal and the second reference voltage, and output the first digital signal or the second digital signal. The control circuit is configured to send a first signal and a second signal to the correlated double sampling circuit when receiving the first digital signal. In response to the first signal, the correlated double sampling circuit receives the third voltage signal. In response to the second signal, the correlated double sampling circuit outputs the first analog signal. The control circuit is further configured to send a third signal and a fourth signal to the correlated double sampling circuit when receiving the second digital signal. In response to the third signal, the correlated double sampling circuit receives the fourth voltage signal. In response to the fourth signal, the correlated double sampling circuit outputs the second analog signal. Based on this, the conversion gain selection circuit can automatically select a conversion gain mode and output a corresponding analog signal based on an output result of the determining circuit. In addition, there is no feedback signal between the conversion gain selection circuit and the pixel unit, and impact of the feedback signal on the pixel unit does not need to be considered when optimization is performed on the conversion gain selection circuit.

In a possible implementation, the correlated double sampling circuit includes a first voltage receiving circuit, a second voltage receiving circuit, a third voltage receiving circuit, and a subtractor. The first voltage receiving circuit and the second voltage receiving circuit are connected in parallel between the column bus and a non-inverting input end of the subtractor, the third voltage receiving circuit is coupled between the column bus and an inverting input end of the subtractor, and an output end of the subtractor is coupled to the first output port. The first voltage receiving circuit receives the first voltage signal based on an input first clock signal. The second voltage receiving circuit receives the second voltage signal based on an input second clock signal. The third voltage receiving circuit receives the third voltage signal based on the first signal. The third voltage receiving circuit outputs the third voltage signal based on an input third clock signal, and the second voltage receiving circuit outputs the second voltage signal based on the second signal. The subtractor outputs the first analog signal based on the second voltage signal and the third voltage signal, or the third voltage receiving circuit receives the fourth voltage signal based on the third signal. The third voltage receiving circuit outputs the fourth voltage signal based on an input fourth clock signal, and the first voltage receiving circuit outputs the first voltage signal based on the fourth signal. The subtractor outputs the second analog signal based on the first voltage signal and the fourth voltage signal. Based on this, capacitors disposed in a plurality of voltage receiving circuits may receive, in a process of selecting the conversion gain mode, voltage signals output by the pixel circuit in different time periods, so that a circuit structure is simpler, and costs are reduced.

In a possible implementation, the first voltage receiving circuit includes a first transistor, a second transistor, and a first capacitor. A control electrode of the first transistor is configured to input the first clock signal, a first electrode of the first transistor is coupled to the column bus, both a second electrode of the first transistor and a first end of the first capacitor are coupled to a first electrode of the second transistor, a second end of the first capacitor is grounded, a control electrode of the second transistor is coupled to the control circuit, and is configured to input the fourth signal, and a second electrode of the second transistor is coupled to the non-inverting input end of the subtractor. Based on this, conduction and cut-off of the first transistor and the second transistor are controlled, so that a process of receiving or outputting the first voltage signal can be accurately controlled.

In a possible implementation, the second voltage receiving circuit includes a third transistor, a fourth transistor, and a second capacitor. A control electrode of the third transistor is configured to input the second clock signal, a first electrode of the third transistor is coupled to the column bus, both a second electrode of the third transistor and a first end of the second capacitor are coupled to a first electrode of the fourth transistor, a second end of the second capacitor is grounded, a control electrode of the fourth transistor is coupled to the control circuit, and is configured to input the second signal, and a second electrode of the fourth transistor is coupled to the non-inverting input end of the subtractor. Based on this, conduction and cut-off of the third transistor and the fourth transistor are controlled, so that a process of receiving or outputting the second voltage signal can be accurately controlled.

In a possible implementation, the third voltage receiving circuit includes a fifth transistor, a sixth transistor, and a third capacitor. A control electrode of the fifth transistor is configured to input the first signal or the third signal, a first electrode of the fifth transistor is coupled to the column bus, both a second electrode of the fifth transistor and a first end of the third capacitor are coupled to a first electrode of the sixth transistor, a second end of the third capacitor is grounded, a control electrode of the sixth transistor is configured to input the third clock signal or the fourth clock signal, and a second electrode of the sixth transistor is coupled to the inverting input end of the subtractor. Based on this, conduction and cut-off of the transistors are controlled, so that a process of receiving or outputting the third voltage signal can be accurately controlled.

In a possible implementation, the determining circuit includes a reference voltage input end, a seventh transistor, and a comparator. When a control electrode of the seventh transistor inputs a high level, the comparator receives the third voltage signal or the fourth voltage signal. A first electrode of the seventh transistor is coupled to the column bus, a second electrode of the seventh transistor is coupled to an inverting input end of the comparator, a non-inverting input end of the comparator is coupled to the reference voltage input end, and an output end of the comparator is separately coupled to the input end of the control circuit and the second output port. Based on this, a clock generator may control the seventh transistor to compare voltages in different conversion gain modes with a given reference voltage, so that a voltage for comparison is selected according to an actual requirement.

In a possible implementation, the image sensor circuit further includes an analog-to-digital converter coupled to the first output port, and the comparator is included in the analog-to-digital converter. Based on this, no additional comparator needs to be disposed, so that a quantity of used components can be reduced while a function requirement is met. This reduces production costs.

In a possible implementation, a gain amplifier may be further disposed between the first output port and the analog-to-digital converter. Based on this, amplification processing may be performed on an analog signal output by the correlated double sampling circuit. This increases a quantity of signals that can be used for image processing, and further improves image precision.

In a possible implementation, the conversion gain selection circuit includes a first output port, a second output port, a correlated double sampling circuit, a determining circuit, and a control circuit. An input end of the correlated double sampling circuit is coupled to the column bus, and both an input end of the determining circuit and the first output port are coupled to an output end of the correlated double sampling circuit. Both an input end of the control circuit and the second output port are coupled to an output end of the determining circuit, and an output end of the control circuit is further coupled to the correlated sampling circuit. The correlated double sampling circuit is configured to receive the first voltage signal and the second voltage signal. The correlated double sampling circuit is further configured to: receive the third voltage signal, and output a fifth voltage to the determining circuit. The fifth voltage is obtained by subtracting the third voltage signal from the second voltage signal. The determining circuit is configured to: receive the fifth voltage and the first reference voltage, and output the first digital signal or the second digital signal. The control circuit is configured to output a first signal when receiving the first digital signal. In response to the first signal, the correlated double sampling circuit outputs the first analog signal. The control circuit is further configured to output a second signal and a third signal when receiving the second digital signal. In response to the second signal, the correlated double sampling circuit receives the fourth voltage signal. In response to the third signal, the correlated double sampling circuit outputs the second analog signal.

In this manner, after receiving a voltage signal output by the pixel unit, the conversion gain selection circuit may select a conversion gain mode based on a signal output by the conversion gain selection circuit.

In a possible implementation, the correlated double sampling circuit includes a first voltage receiving circuit, a second voltage receiving circuit, a third voltage receiving circuit, and a subtractor. The first voltage receiving circuit and the second voltage receiving circuit are connected in parallel between the column bus and a non-inverting input end of the subtractor, the third voltage receiving circuit is coupled between the column bus and an inverting input end of the subtractor, and an output end of the subtractor is coupled to the first output port. The first voltage receiving circuit receives the first voltage signal based on an input first clock signal. The second voltage receiving circuit receives the second voltage signal based on an input second clock signal. The third voltage receiving circuit receives the third voltage signal based on an input third clock signal; the third voltage receiving circuit outputs the third voltage signal based on an input fourth clock signal, and the second voltage receiving circuit outputs the second voltage signal based on the first signal; and the subtractor outputs the first analog signal based on the second voltage signal and the third voltage signal; or the third voltage receiving circuit receives the fourth voltage signal based on the input second signal; the third voltage receiving circuit outputs the fourth voltage signal based on an input fifth clock signal, and the first voltage receiving circuit outputs the first voltage signal based on the third signal; and the subtractor outputs the second analog signal based on the first voltage signal and the fourth voltage signal.

In a possible implementation, the first voltage receiving circuit includes a first transistor, a second transistor, and a first capacitor. A control electrode of the first transistor is configured to input the third clock signal, a first electrode of the first transistor is coupled to the column bus, both a second electrode of the first transistor and a first end of the first capacitor are coupled to a first electrode of the second transistor, a second end of the first capacitor is grounded, a control electrode of the second transistor is coupled to the control circuit, and is configured to input the third signal, and a second electrode of the second transistor is coupled to the non-inverting input end of the subtractor.

In a possible implementation, the second voltage receiving circuit includes a third transistor, a fourth transistor, and a second capacitor. A control electrode of the third transistor is configured to input the second clock signal, a first electrode of the third transistor is coupled to the column bus, both a second electrode of the third transistor and a first end of the second capacitor are coupled to a first electrode of the fourth transistor, a second end of the second capacitor is grounded, a control electrode of the fourth transistor is coupled to the control circuit, and is configured to input the first signal, and a second electrode of the fourth transistor is coupled to the non-inverting input end of the subtractor.

In a possible implementation, the third voltage receiving circuit includes a fifth transistor, a sixth transistor, and a third capacitor. A control electrode of the fifth transistor is configured to input the second signal or the third clock signal, a first electrode of the fifth transistor is coupled to the column bus, both a second electrode of the fifth transistor and a first end of the third capacitor are coupled to a first electrode of the sixth transistor, a second end of the third capacitor is grounded, a control electrode of the sixth transistor is configured to input the fourth clock signal or the fifth clock signal, and a second electrode of the sixth transistor is coupled to the inverting input end of the subtractor.

In a possible implementation, the determining circuit includes a reference voltage input end and a comparator. An inverting input end of the comparator is coupled to the output end of the correlated double sampling circuit, a non-inverting input end of the comparator is coupled to the reference voltage input end, and an output end of the comparator is separately coupled to the input end of the control circuit and the second output port.

In a possible implementation, the image sensor circuit further includes an analog-to-digital converter coupled to the first output port, and the comparator is included in the analog-to-digital converter.

In a possible implementation, the conversion gain selection circuit further includes a gain amplifier. An input end of the gain amplifier is coupled to the output end of the subtractor, and an output end of the gain amplifier is coupled to the input end of the determining circuit and the first output port. Based on this, a quantity of used components can be reduced while a function requirement is met. This reduces production costs.

According to a second aspect, an image sensor chip is provided. The image sensor chip includes the image sensor circuit, in any one of the foregoing possible implementations, packaged in a package structure.

According to a third aspect, a camera device is provided. The camera device includes the image sensor chip in the second aspect.

### BRIEF DESCRIPTION OF DRAWINGS

FIG. 1 is a diagram of a structure of a double conversion gain pixel unit of an existing CMOS image sensor;
FIG. 2 is a principle diagram of an existing automatic conversion gain determining mechanism;
FIG. 3 is a principle diagram of another existing automatic conversion gain determining mechanism;
FIG. 4 is a diagram of a topology structure of an image sensor circuit according to an embodiment of this application;
FIG. 5 is a diagram of a topology structure of a conversion gain selection circuit according to an embodiment of this application;
FIG. 6 is a principle diagram of a conversion gain selection circuit according to an embodiment of this application;
FIG. 7 is a principle diagram of another conversion gain selection circuit according to an embodiment of this application;
FIG. 8 is a principle diagram of a control circuit according to an embodiment of this application;
FIG. 9 is a schematic working flowchart of an image sensor circuit according to an embodiment of this application;
FIG. 10 is a control timing diagram of the control circuit in FIG. 8 according to an embodiment of this application;
FIG. 11 is a mode selection control timing diagram of an image sensor circuit according to an embodiment of this application;
FIG. 12 is a mode selection control timing diagram of another image sensor circuit according to an embodiment of this application;
FIG. 13 is a diagram of a topology structure of another image sensor circuit according to an embodiment of this application;
FIG. 14 is a diagram of a topology structure of another conversion gain selection circuit according to an embodiment of this application;
FIG. 15 is a principle diagram of still another conversion gain selection circuit according to an embodiment of this application;
FIG. 16 is a principle diagram of another conversion gain selection circuit according to an embodiment of this application;
FIG. 17 is a schematic working flowchart of another image sensor circuit according to an embodiment of this application;
FIG. 18 is a principle diagram of another control circuit according to an embodiment of this application;
FIG. 19 is a timing diagram of the control circuit in FIG. 18 according to an embodiment of this application;
FIG. 20 is a mode selection control timing diagram of another image sensor circuit according to an embodiment of this application; and
FIG. 21 is a mode selection control timing diagram of another image sensor circuit according to an embodiment of this application.

### DESCRIPTION OF EMBODIMENTS

The following describes technical solutions in embodiments of this application with reference to the accompanying drawings in embodiments of this application.

In descriptions of this application, unless otherwise specified, "/" represents an "or" relationship between associated objects. For example, A/B may represent A or B. The term "and/or" in this application is merely an association relationship for describing the associated objects, and represents that three relationships may exist. For example, A and/or B may represent the following three cases: Only A exists, both A and B exist, and only B exists, where A and B may be singular or plural. In addition, in the descriptions of this application, unless otherwise specified, "a plurality of" means two or more than two. "At least one item (piece) of the following" or a similar expression thereof means any combination of these items, including a singular item (piece) or any combination of plural items (pieces). For example, at least one item (piece) of a, b, or c may indicate: a; b; c; a and b; a and c; b and c; or a, b, and c; where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. In embodiments of this application, unless otherwise clearly specified and limited, the term "coupling" may be a manner of implementing an electrical coupling for signal transmission, and the term "coupling" may be a direct electrical coupling, or may be an indirect electrical coupling through an intermediate medium. For example, coupling is implemented by using a resistor, an inductor, or another electrical element.

Exactly, use of the terms such as "example" or "for example" is intended to present a related concept in a specific manner for ease of understanding.

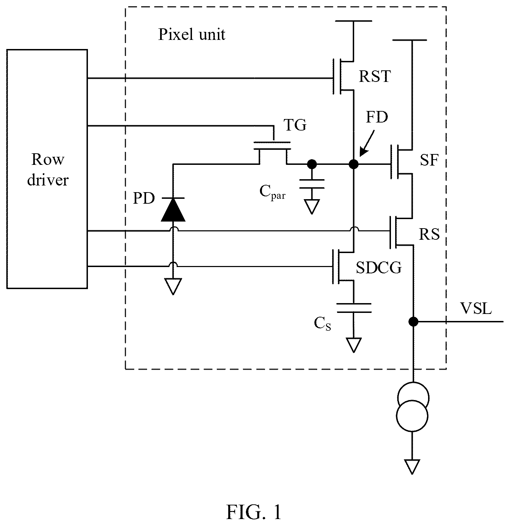

A pixel unit in a CMOS image sensor that is commonly used currently includes a photodiode, and a floating diffusion node coupled to the photodiode through a switch. For example, as shown in FIG. 1, an existing CMOS image sensor includes one photodiode (photodiode, PD) working under a reverse bias voltage, four conventional transistors (referred to as a 4T for short), and one control switch for double conversion gain (Switch for DCG, SDCG). The 4T includes a reset transistor (RST), an electric charge transmission gate (TG), a source follower (SF), and a row selector (RS). A source of the RST, a gate of the SF, and a source of the TG are coupled to the floating diffusion node (floating diffusion, FD). A capacitance of the FD is denoted as C_{FD}. An electron generated in the photodiode passes through the TG, enters the FD for storage, and changes a voltage of an FD point. The voltage change reflects a quantity of incident photons, so that an optical signal is converted into a voltage signal for subsequent image processing. A conversion gain (conversion gain, CG) is defined as a voltage change that is of the FD point and that is caused by each electron, and is inversely proportional to C_{FD}. A smaller C_{FD} value indicates a higher conversion gain, and a larger C_{FD} value indicates a lower conversion gain.

To obtain images with a high dynamic range (high dynamic range, HDR), two solutions may be adopted. A first solution is to perform long-term and short-term exposure (that is, exposure time is classified into long time and short time) on the photodiode (PD), so that quantities of photo-generated electrons are different. In this way, voltage changes at the FD point are different, and C_{FD} is fixed at this time. A second solution is single exposure. A capacitance value of C_{FD} is changed, so that a same quantity of photo-generated electrons is used to generate different voltage.

For the single exposure solution, two conversion gain modes are usually used, to obtain an image with a high dynamic range. In a low-illumination environment, the capacitance value of C_{FD} is small when a high conversion gain mode (high conversion gain mode, HCG) is used. In a high-illumination environment, the capacitance value of C_{FD} is large when a low conversion gain mode (low conversion gain mode, LCG) is used. Certainly, the foregoing method may also be applicable to a multi-gain solution in which different C_{FD} values correspond to different incident light intensities.

In an existing pixel design, the capacitance value of C_{FD} is usually changed by using a method of connecting a capacitor Cs in parallel with the FD. Specifically, in the high conversion gain mode (HCG), the switch for double conversion gain (SDCG) is turned off, and a parasitic capacitance Cₚₐᵣ of the FD is denoted as C_{FD}, namely, C_{FD}, _{HCG} = Cₚₐᵣ. In the low conversion gain mode (LCG), the switch for double conversion gain (SDCG) is turned on, and Cs is connected to the FD point, so that the capacitance of the FD point is changed to Cₚₐᵣ + Cs, namely, C_{FD}, _{LCG} = Cₚₐᵣ + C_{S}.

For the photo-generated electrons generated in the single exposure solution, regardless of the incident light intensity, two times of switching, namely, the HCG and the LCG, need to be performed, and two corresponding voltage values are output separately. An ADC generates two quantization results, HDR synthesizing is performed, and a frame of image is finally output. Specific steps are as follows:
(1) Turn off the switch for double conversion gain (SDCG). In this case, the C_{FD} value is small, the HCG mode is entered, a voltage change caused by the photo-generated electrons imported from the PD to the FD is large, an output voltage of a pixel is processed in a sequence of "correlated double sampling (correlated double sampling, CDS) -> a programmable gain amplifier (programmable gain amplifier, PGA) -> an analog-to-digital converter (analog-to-digital converter, ADC)", and a quantization result is output.
(2) Turn on the switch for double conversion gain (SDCG). In this case, the C_{FD} value is large, the LCG mode is switched to, a voltage change caused by the same photo-generated electron at the FD point is small, the output voltage of the pixel is processed in a sequence of the CDS -> the PGA -> the ADC, and another quantization result is output.
(3) Synthesize the two quantization results into one image for output, and use the image as a final image of the HDR.

It can be learned from the steps that, in this solution, two quantization results need to be output each time of exposure for final HDR synthesizing, and the CDS, the PGA, and the ADC all need to work twice. Therefore, a calculation amount is large, a large memory space is occupied, power consumption is increased, and improvement of a frame rate is also limited.

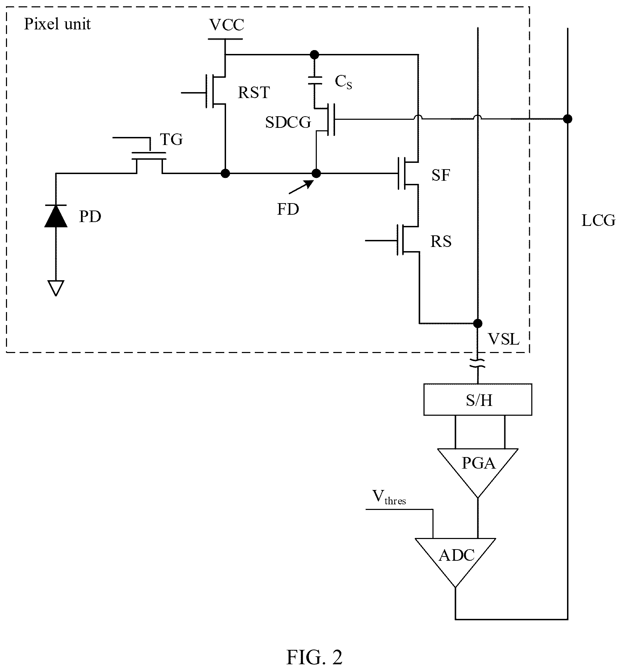

As shown in FIG. 2, currently, an automatic conversion gain determining mechanism is introduced in a single exposure solution. For each pixel, the switch for double conversion gain (SDCG) is turned off first, so that the HCG mode is entered by default, and an output voltage of the pixel is sampled through a sample and hold circuit (S/H), and then amplified through the PGA. Then, a difference △V between a reset voltage and a signal voltage is calculated at an output end of the ADC, and △V is compared with a preset threshold Vₜₕᵣₑₛ. If the difference △V is less than the threshold Vₜₕᵣₑₛ, it is determined that there is a low-illumination environment. To be specific, the HCG mode is applicable to a present incident light intensity, and the present difference is directly used for image processing. If the difference △V is greater than or equal to the threshold Vₜₕᵣₑₛ, it is determined that there is a high-illumination environment. To be specific, the LCG mode is applicable to a present incident light intensity, and the capacitance of the FD point is increased, a signal voltage and a reset voltage are recollected, and a new difference is output for image processing. However, in this solution, a column line (namely, an LCG line in FIG. 2) needs to be added, and a determining result of a double conversion gain (DCG) is fed back to the switch for double conversion gain (SDCG) in the pixel, for selecting a double conversion gain (DCG) mode. A voltage change of the newly added column line causes crosstalk to a voltage on a column bus. Therefore, a shielding solution needs to be considered in a layout design, to increase winding complexity. In addition, in this solution, there is a lack of correlation between the reset voltage and the signal voltage in the LCG mode. This reduces image quality.

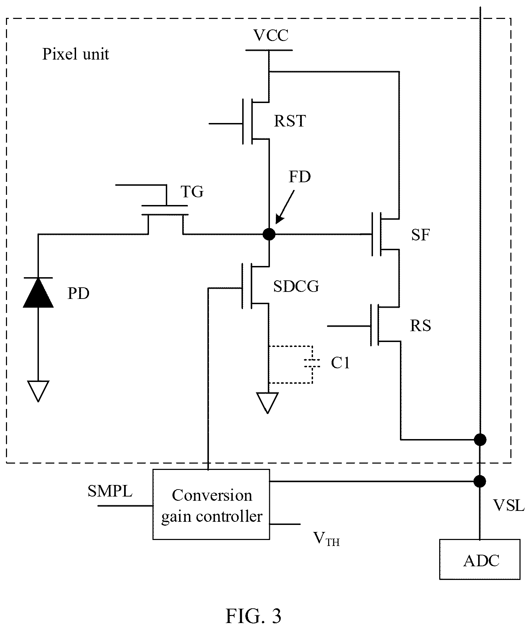

As shown in FIG. 3, currently, an automatic conversion gain determining mechanism is also introduced in another single exposure solution. A main difference between this solution and the solution in FIG. 2 lies in that a voltage sampling point is disposed on a column bus (VSL), and then a conversion gain controller (CG Controller) compares a signal voltage Vₒᵤₜ in the HCG mode with a reference voltage V_{TH}, to determine a double conversion gain (DCG) mode (an HCG mode or an LCG mode) that adapts to the present incident light intensity, so that the photo-generated electron generated during single exposure is processed by the CDS, the PGA, and the ADC only once. However, in this manner, a conversion gain controller needs to be disposed, and a feedback column line needs to be added to the switch for double conversion gain (SDCG). This may also cause crosstalk to a voltage on the column bus.

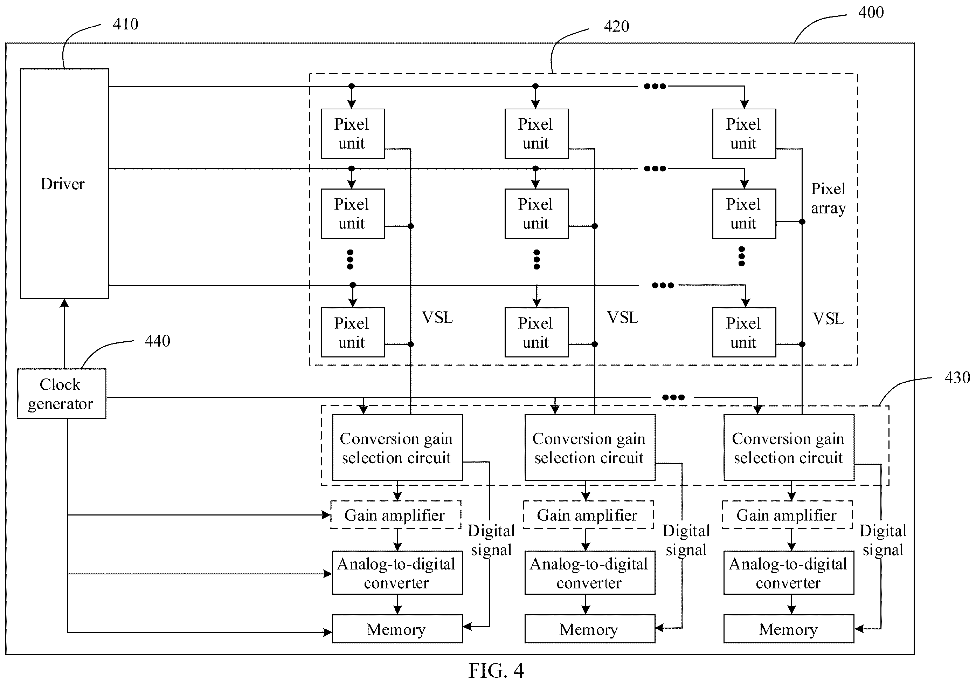

To resolve the foregoing problem, an embodiment of this application provides an image sensor circuit 400. As shown in FIG. 4, the image sensor circuit 400 includes a driver 410 and a pixel array 420. The pixel array 420 includes a plurality of pixel units that are coupled to the driver 410 and that have two conversion gain modes. The image sensor circuit 400 further includes a plurality of conversion gain selection circuits 430. Pixel units in a same column of the pixel array 420 are coupled to the conversion gain selection circuit 430 through a column bus (VSL). The driver 410 is configured to drive the pixel unit to output a plurality of voltage signals in the two conversion gain modes. The conversion gain selection circuit 430 is configured to output one analog signal and one digital signal based on the plurality of voltage signals. The digital signal indicates a conversion gain mode of the pixel unit, and the analog signal represents an output voltage corresponding to the conversion gain mode.

In a possible implementation, the driver 410 is configured to: input a low level to a switch TG, and drive the pixel unit to output a first voltage signal in a low conversion gain and output a second voltage signal in a high conversion gain mode. In addition, the driver 410 is further configured to: input a high level to the switch TG, and drive the pixel unit to output a third voltage signal in the high conversion gain mode and output a fourth voltage signal in the low conversion gain mode. The conversion gain selection circuit 430 is configured to: output a first analog signal and a first digital signal, or output a second analog signal and a second digital signal. The first analog signal is obtained by subtracting the third voltage signal from the second voltage signal, and the second analog signal is obtained by subtracting the fourth voltage signal from the first voltage signal. The first digital signal and the second digital signal are obtained by comparing the third voltage signal with a first reference voltage, or the first digital signal and the second digital signal are obtained by comparing the fourth voltage signal with a second reference voltage. Levels of the first digital signal and the second digital signal are opposite.

The pixel unit in FIG. 1 is used as an example. After the image sensor circuit 400 is powered on, the driver 410 first turns on the SDCG and conducts the RST and the TG, so that the floating diffusion node FD, the C_{S}, and the photodiode PD are in a reset state; and then the driver 410 cuts off the RST and the TG. In this case, the SDCG is in an on state, and the pixel unit may output the first voltage signal to the conversion gain selection circuit 430 in the low conversion gain mode. Secondly, the SDCG is turned off, the pixel unit is driven to output the second voltage signal to the conversion gain selection circuit 430 in the high conversion gain mode, and the conversion gain selection circuit 430 receives the first voltage signal and the second voltage signal. Then, the driver 410 conducts the TG, so that the photodiode transfers all photo-generated electrons to the floating diffusion node, and the pixel unit is controlled to: output the third voltage signal to the conversion gain selection circuit 430 in the high conversion gain mode, and output the fourth voltage signal to the conversion gain selection circuit 430 in the low conversion gain mode. Finally, the conversion gain selection circuit 430 receives the third voltage signal, and compares the third voltage signal with the first reference voltage. When it is determined that the third voltage signal is greater than the first reference voltage, the first analog signal and the first digital signal are output. When it is determined that the third voltage signal is less than the first reference voltage, the fourth voltage signal is received, and the second analog signal and the second digital signal are output. Alternatively, the conversion gain selection circuit 430 may compare the fourth voltage signal with the second reference voltage. When it is determined that the fourth voltage signal is greater than the second reference voltage, the first analog signal and the first digital signal are output. When it is determined that the fourth voltage signal is less than the second reference voltage, the fourth voltage signal is received, and the second analog signal and the second digital signal are output. The first analog signal is obtained by subtracting the third voltage signal from the second voltage signal, and the second analog signal is obtained by subtracting the fourth voltage signal from the first voltage signal.

In the foregoing implementation process, the first digital signal and the second digital signal indicate the two conversion gain modes of the pixel unit. The first digital signal indicates the high conversion gain mode of the pixel unit, and may be represented by a digit "0"; and the second digital signal indicates the low conversion gain mode of the pixel unit, and may be represented by a digit "1". The first digital signal and the second digital signal may be stored into a memory coupled to a second output port 433. A first output port 432 may be coupled to an analog-to-digital converter ADC, and the analog-to-digital converter may convert the first analog signal or the second analog signal into a digital signal for subsequent image processing.

In the foregoing implementation process, no feedback line needs to be disposed between the conversion gain selection circuit 430 and the pixel unit. This reduces cabling difficulty, and avoids crosstalk to a voltage on the column bus (VSL). In addition, the conversion gain selection circuit 430 and the pixel array 420 are disposed independently, so that it is more flexible when optimization is performed on the circuit.

The image sensor circuit 400 further includes a clock generator 440. The clock generator 440 is coupled to the driver 410 and each conversion gain selection circuit 430. The clock generator 440 is configured to provide a clock control signal for the driver 410 and each conversion gain selection circuit 430.

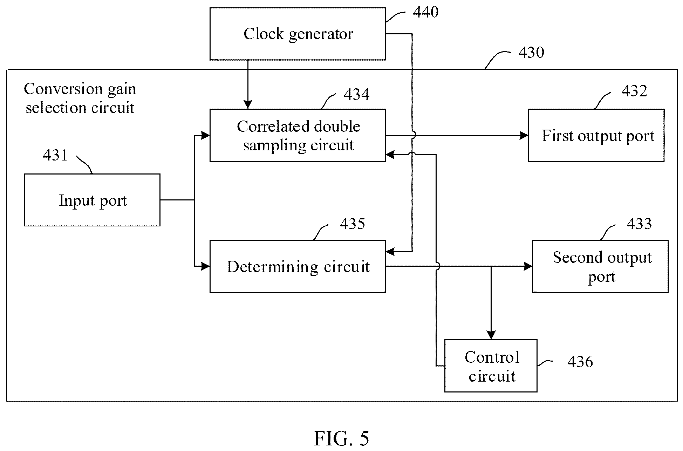

As shown in FIG. 5, in an implementation solution, the conversion gain selection circuit 430 provided in this embodiment of this application includes an input port 431, the first output port 432, the second output port 433, a correlated double sampling circuit 434, a determining circuit 435, and a control circuit 436. Both an input end of the correlated double sampling circuit 434 and an input end of the determining circuit 435 are coupled to the column bus (VSL), an output end of the correlated double sampling circuit 434 is coupled to the first output port 432, an output end of the determining circuit 435 is separately coupled to the second output port 433 and an input end of the control circuit 436, and the correlated double sampling circuit 434 is further coupled to an output end of the control circuit 436. The correlated double sampling circuit 434 may receive the first voltage signal and the second voltage signal. The determining circuit may receive the third voltage signal and the first reference voltage, and output the first digital signal or the second digital signal; or the determining circuit 435 may receive the fourth voltage signal and the second reference voltage, and output the first digital signal or the second digital signal. The control circuit 436 may send a first signal and a second signal to the correlated double sampling circuit 434 when receiving the first digital signal. The correlated double sampling circuit 434 receives the third voltage signal when receiving the first signal. The correlated double sampling circuit 434 outputs the first analog signal when the correlated double sampling circuit 434 receives the second signal.

Optionally, the control circuit 436 may further send a third signal and a fourth signal to the correlated double sampling circuit 434 when receiving the second digital signal. The correlated double sampling circuit 434 receives the fourth voltage signal when receiving the third signal. The correlated double sampling circuit 434 outputs the second analog signal when the correlated double sampling circuit 434 receives the fourth signal.

For example, the correlated double sampling circuit 434 may be controlled, based on a first clock signal output by the clock generator 440, to receive the first voltage signal, and the correlated double sampling circuit 434 may be controlled, based on a second clock signal output by the clock generator 440, to receive the second voltage signal. The determining circuit 435 compares the third voltage signal with the first reference voltage. When it is determined that the third voltage signal is greater than the first reference voltage, the first digital signal is output. When it is determined that the third voltage signal is less than the first reference voltage, the second digital signal is output. Alternatively, the determining circuit 435 may compare the fourth voltage signal with the second reference voltage. When it is determined that the fourth voltage signal is greater than the second reference voltage, the first digital signal is output. When it is determined that the fourth voltage signal is less than the second reference voltage, the second digital signal is output. The control circuit 436 may output the first signal and the second signal to the correlated double sampling circuit 434 when receiving the first digital signal. The correlated double sampling circuit 434 receives the third voltage signal when receiving the first signal. When the second signal is received, the second voltage signal is output. In this case, the correlated double sampling circuit 434 outputs the third voltage signal based on a third clock signal sent by the clock generator 440, and obtains the first analog signal by subtracting the third voltage signal from the second voltage signal. The control circuit 436 may send the third signal and the fourth signal to the control correlated double sampling circuit 434 when receiving the second digital signal. The correlated double sampling circuit 434 receives the fourth voltage signal when receiving the third signal; and outputs the first voltage signal when receiving the fourth signal. In this case, the correlated double sampling circuit 434 outputs the fourth voltage signal based on a fourth clock signal sent by the clock generator 440, and obtains the second analog signal by subtracting the fourth voltage signal from the first voltage signal.

In the foregoing manner, the correlated double sampling circuit 434 may automatically select, under control of the control circuit 436 and the clock generator 440, a most appropriate conversion gain mode under a present incident light intensity. The control circuit 436 controls the correlated double sampling circuit 434 based on the digital signal output by the determining circuit 435, so that a voltage output by the correlated double sampling circuit 434 can be more flexibly regulated. In addition, the digital signal and the analog signal that are output can be also combined, so that a subsequent processing circuit can perform image processing more conveniently.

Optionally, a gain amplifier may be further disposed between the first output port 432 and the analog-to-digital converter ADC, and the output voltage is amplified by the gain amplifier and then sent to the ADC for conversion into a digital signal. A programmable gain amplifier (PGA) may be selected as the gain amplifier, so that a gain of the amplifier can be adjusted according to an actual requirement. The ADC and the PGA are enabled based on a clock signal output by the clock generator 440, so that start time can be accurately controlled.

It may be understood that another type of gain amplifier may alternatively be selected. This is not specifically limited in this embodiment of this application.

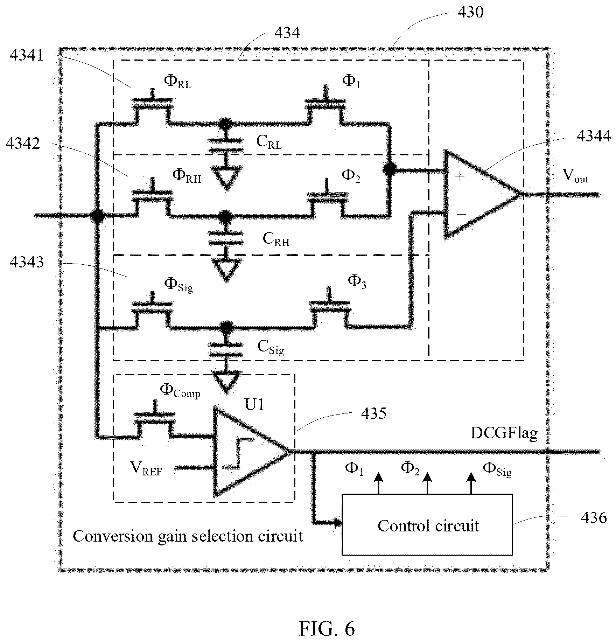

In an implementation solution, as shown in FIG. 6, the correlated double sampling circuit 434 includes a first voltage receiving circuit 4341, a second voltage receiving circuit 4342, a third voltage receiving circuit 4343, and a subtractor 4344. The first voltage receiving circuit 4341 and the second voltage receiving circuit 4342 are connected in parallel between the input port 431 and a non-inverting input end of the subtractor 4344, the third voltage receiving circuit 4343 is coupled between the input port 431 and an inverting input end of the subtractor 4344, and an output end of the subtractor 4344 is coupled to the first output port 432. The first voltage receiving circuit 4341 receives the first voltage signal based on the first clock signal output by the clock generator 440, and outputs the first voltage signal to the non-inverting input end of the subtractor 4344 based on the fourth signal output by the control circuit 436. The second voltage receiving circuit 4342 receives the second voltage signal based on the second clock signal output by the clock generator 440, and outputs the second voltage signal to the non-inverting input end of the subtractor 4344 based on the second signal output by the control circuit 436. The third voltage receiving circuit 4343 receives the third voltage signal based on the first signal output by the control circuit 436, and outputs the third voltage signal to the inverting input end of the subtractor 4344 based on the third clock signal output by the clock generator 440. Alternatively, the third voltage receiving circuit 4343 receives the fourth voltage signal based on the third signal output by the control circuit 436, and outputs the fourth voltage signal to the inverting input end of the subtractor 4344 based on the fourth clock signal output by the clock generator 440. The subtractor 4344 subtracts the third voltage signal from the second voltage signal, to obtain the first analog signal, or the subtractor 4344 subtracts the fourth voltage signal from the first voltage signal, to obtain the second analog signal.

In an implementation solution, the first voltage receiving circuit 4341 includes a first transistor Φ_{RL}, a second transistor Φ₁, and a first capacitor C_{RL}. A control electrode of the first transistor Φ_{RL} is coupled to the clock generator 440, and is configured to input the first clock signal. A first electrode of the first transistor Φ_{RL} is coupled to the input port 431. Both a second electrode of the first transistor Φ_{RL} and a first end of the first capacitor C_{RL} are coupled to a first electrode of the second transistor Φ₁. A second end of the first capacitor C_{RL} is grounded. A control electrode of the second transistor Φ₁ is coupled to the control circuit 436, and is configured to input the fourth signal. A second electrode of the second transistor Φ₁ is coupled to the non-inverting input end of the subtractor 4344. When the first capacitor needs to receive a voltage, the clock generator 440 may control the first transistor Φ_{RL} to be conducted. When a voltage received by the first capacitor needs to be output, the control circuit 436 may control the second transistor Φ₁ to be conducted.

Further, the second voltage receiving circuit 4342 includes a third transistor Φ_{RH}, a fourth transistor Φ₂, and a second capacitor C_{RH}. A control electrode of the third transistor Φ_{RH} is coupled to the clock generator 440, and is configured to input the second clock signal. A first electrode of the third transistor Φ_{RH} is coupled to the input port 431. Both a second electrode of the third transistor Φ_{RH} and a first end of the second capacitor C_{RH} are coupled to a first electrode of the fourth transistor Φ₂. A second end of the second capacitor C_{RH} is grounded. A control electrode of the fourth transistor Φ₂ is coupled to the control circuit 436, and is configured to input the second signal. A second electrode of the fourth transistor Φ₂ is coupled to the non-inverting input end of the subtractor 4344.

Further, the third voltage receiving circuit 4343 includes a fifth transistor Φ_{sig}, a sixth transistor Φ₃, and a third capacitor C_{sig}. A control electrode of the fifth transistor Φ_{sig} is coupled to the control circuit 436, and is configured to input the first signal or the third signal. A first electrode of the fifth transistor Φ_{sig} is coupled to the input port 431. Both a second electrode of the fifth transistor Φ_{sig} and a first end of the third capacitor C_{sig} are coupled to a first electrode of the sixth transistor Φ₃. A second end of the third capacitor C_{sig} is grounded. A control electrode of the sixth transistor Φ₃ is coupled to the clock generator 440, and is configured to input the third clock signal or the fourth clock signal. A second electrode of the sixth transistor Φ₃ is coupled to the inverting input end of the subtractor 4344.

In the foregoing manner, the clock generator 440 and the control circuit 436 can more accurately control output voltages in different conversion gain modes.

In an implementation solution, the determining circuit 435 includes a reference voltage input end (namely, an input end corresponding to a reference voltage V_{REF}), a seventh transistor Φ_{comp}, and a comparator U1. A control electrode of the seventh transistor Φ_{comp} is coupled to the clock generator 440. A first electrode of the seventh transistor Φ_{comp} is coupled to the input port 431end. A second electrode of the seventh transistor Φ_{comp} is coupled to an inverting input end of the comparator U1. A non-inverting input end of the comparator U1 is coupled to the reference voltage input end. An output end of the comparator U1 is separately coupled to the control circuit 436 and the second output port 433. When controlling the seventh transistor Φ_{comp} to be conducted, the control circuit 436 may compare an output voltage of the pixel unit with the given reference voltage V_{REF}.

In the foregoing manner, the clock generator 440 controls a conducted/cut-off state of the seventh transistor Φ_{comp}, so that the determining circuit may be controlled to use a voltage output by the pixel unit in a specific conversion gain mode as a determining basis. This is more convenient during use.

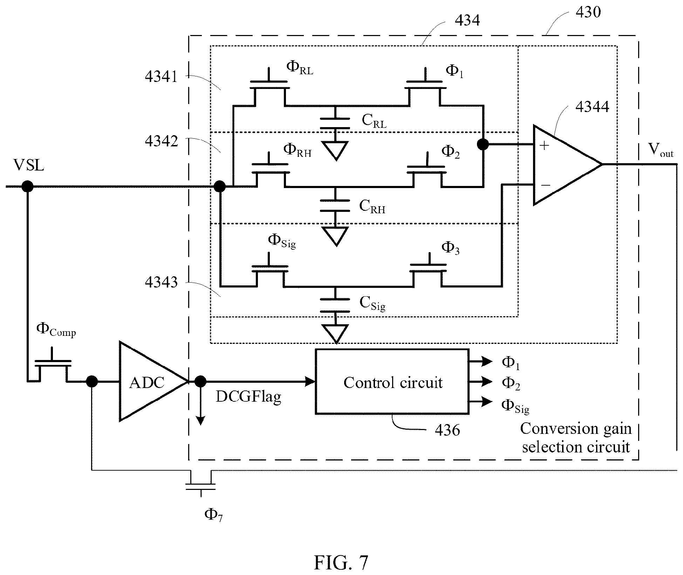

Further, the comparator may use an independent comparator, or may reuse a comparator inside the analog-to-digital converter ADC. For example, as shown in FIG. 7, when a comparator inside the analog-to-digital converter ADC is reused, the first voltage receiving circuit 4341, the second voltage receiving circuit 4342, the third voltage receiving circuit 4343, and the subtractor 4344 are still coupled in the manner in FIG. 6. The control electrode of the seventh transistor Φ_{comp} is coupled to the clock generator 440. However, the first electrode of the seventh transistor Φ_{comp} is directly coupled to the column bus (VSL), the second electrode of the seventh transistor Φ_{comp} is coupled to an inverting input end of the comparator inside the ADC, and the reference voltage input end is coupled to a non-inverting input end of the comparator inside the ADC. An output end of the ADC is coupled to the control circuit 436 and the second output port 433. The inverting input end of the comparator inside the ADC is coupled to the output end of the subtractor 4344 through the eighth transistor Φ₇, and the control electrode of the eighth transistor Φ₇ is coupled to the clock generator 440, and controls conduction or cut-off based on a clock signal output by the clock generator 440. In this manner, not only a function of the determining circuit can be implemented, but also use of components can be reduced. This reduces production costs.

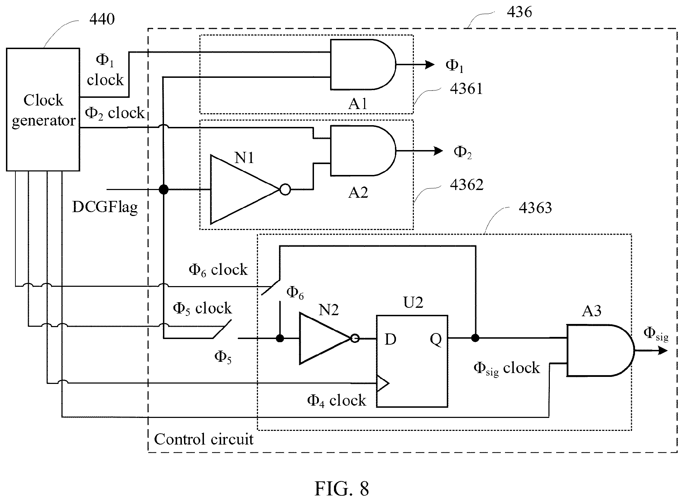

In an implementation solution, as shown in FIG. 8, the control circuit 436 provided in this embodiment of this application includes a first control unit 4361 coupled to the clock generator 440, a second control unit 4362 coupled to the clock generator 440, and a third control unit 4363 coupled to the clock generator 440. The first control unit 4362 controls the second transistor Φ₁ based on a signal output by the output end of the determining circuit 435 and the first signal output by the clock generator 440. The second control unit 4362 controls the fourth transistor Φ₂ based on a signal output by the output end of the determining circuit 435 and the second signal output by the clock generator 440. The third control unit 4363controls the fifth transistor Φ_{sig} based on a signal output by the output end of the determining circuit 435 and the third signal output by the clock generator 440.

Optionally, the first control unit 4362 includes a first AND gate A1. A first input end of the first AND gate A1 is coupled to the clock generator 440, a second input end of the first AND gate A1 is coupled to the output end of the determining circuit 435, and an output end of the first AND gate A1 is coupled to the control electrode of the second transistor Φ₁. The second control unit 4362 includes a first NOT gate N1 and a second AND gate A2. An input end of the first NOT gate N1 is coupled to the output end of the determining circuit 435, and a first input end of the second AND gate A2 is coupled to the clock generator 440. A second input end of the second AND gate A2 is coupled to an output end of the first NOT gate N1, and an output end of the second AND gate A2 is coupled to the control electrode of the fourth transistor Φ₂. The third control unit 4363 includes a second NOT gate N2, a D trigger U2, a first transmission gate Φ₅, a second transmission gate Φ₆, and a third AND gate A3. A first electrode of the first transmission gate Φ₅ is coupled to the output end of the determining circuit 435, and both an input end of the second NOT gate N2 and a first electrode of the second transmission gate Φ₆ are coupled to a second electrode of the first transmission gate Φ₅. An output end of the second NOT gate N2 is coupled to an input end of the D trigger U2. A clock pin of the D trigger U2, a control electrode of the first transmission gate Φ₅, a control electrode of the second transmission gate Φ₆, and a first input end of the third AND gate A3 are all coupled to the clock generator 440. Both a second input end of the third AND gate A3 and a second electrode of the second transmission gate Φ₆ are coupled to an output end of the D trigger U2. An output end of the third AND gate A3 is coupled to the control electrode of the fifth transistor Φ_{sig}.

In the foregoing implementation process, when the digital signal (DCGFlag) is 0, the clock generator controls, based on an output control signal, the first transmission gate Φ₅ to be conducted, inputs the digital signal to the D trigger, cuts off the first transmission gate Φ₅, and conducts the second transmission gate Φ₆.

Optionally, the control circuit 436 may alternatively be implemented by using a single-chip microcomputer, a digital signal processor, or another logic circuit that can implement a same or similar function. This is not specifically limited in this embodiment of this application. An NMOS transistor may be selected as the first transmission gate Φ₅ and the second transmission gate Φ₆.

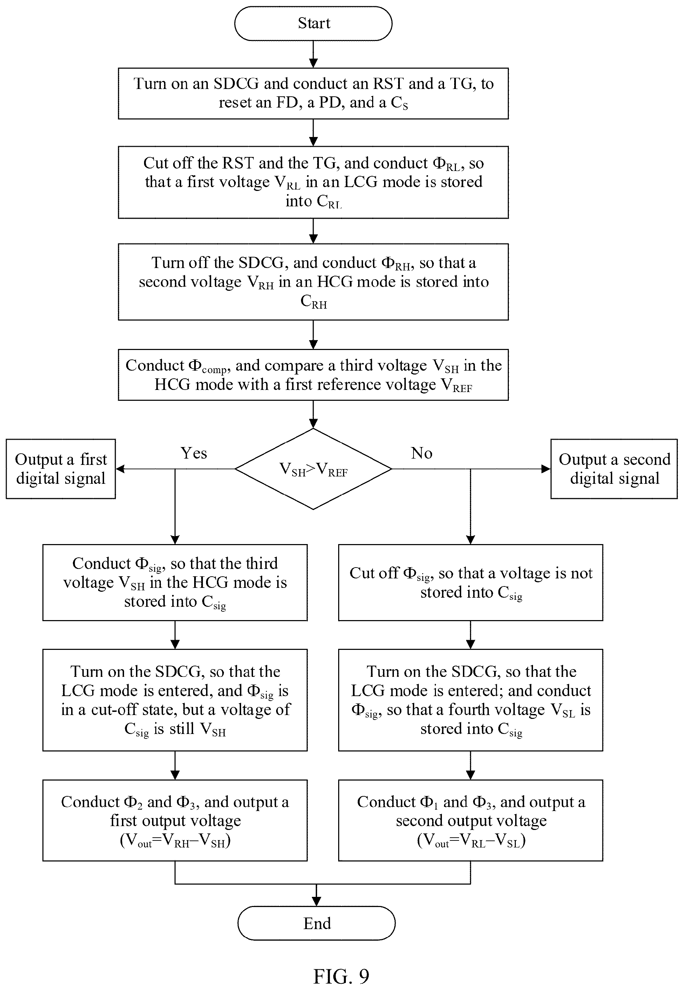

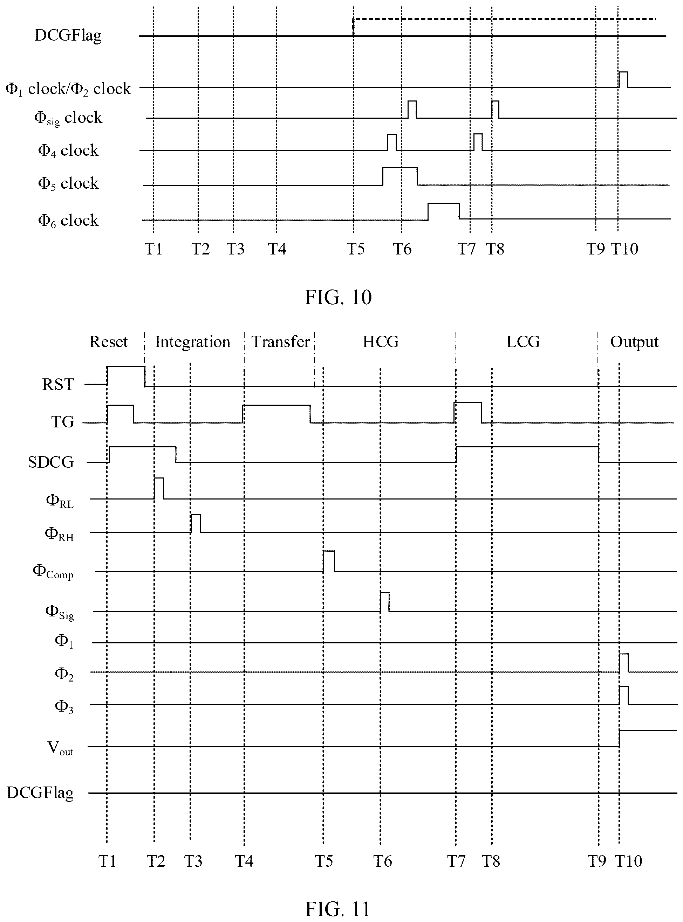

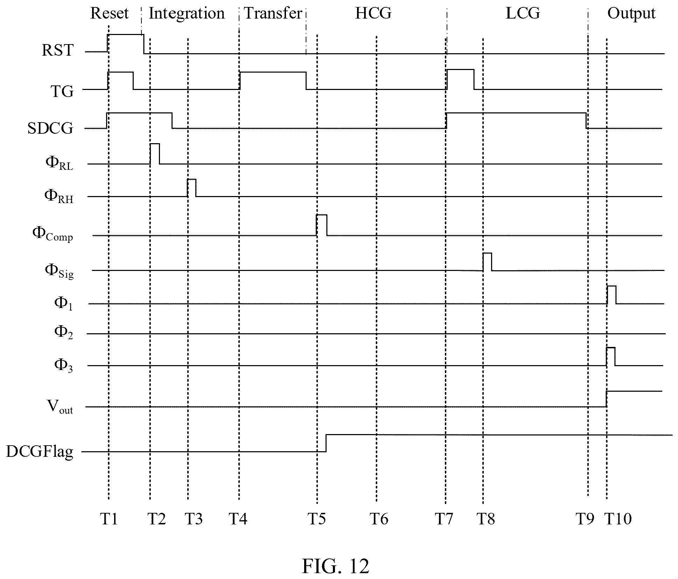

To facilitate understanding of the technical solutions of this application, in this embodiment of this application, a process of selecting a conversion gain mode of the image sensor circuit is briefly described by using the pixel array 420 including pixel units in FIG. 4 as an example. FIG. 9 shows a working process of the image sensor circuit. FIG. 10 shows a timing of control signals output by the control circuit 436. FIG. 11 shows a corresponding timing when the conversion gain selection circuit selects an HCG mode. FIG. 12 shows a corresponding timing when the conversion gain selection circuit selects an LCG mode. In FIG.10, FIG. 11, and FIG. 12, each running phase of the pixel unit is represented between two vertical dotted lines, including reset (reset), integration (integration), transfer (transfer), an HCG mode, an LCG mode, output (output), and the like.

As shown in FIG. 10, T1 to T10 represent moments preset in a time sequence starting from power-on of the image sensor circuit. "Φ₁ clock" represents a clock signal of the second transistor Φ₁, "Φ₂ clock" represents a clock signal of the fourth transistor Φ₂, "Φ_{Sig} clock" represents a clock signal of the fifth transistor Φ_{Sig}, "Φ₄ clock" represents a clock signal of the D trigger, "Φ₅ clock" represents a clock signal of the first transmission gate Φ₅, "Φ₆ clock" represents a clock signal of the second transmission gate Φ₆, and "DCGFlag" represents a digital signal of a conversion gain mode. In Φ₁, Φ₂, Φ_{Sig}, and DCGFlag, a horizontal solid line indicates the HCG mode, and a horizontal dashed line indicates the LCG mode. "Φ₁ clock"/"Φ₂ clock" can output a high level only when an output voltage is required at the moment T10. "Φ_{Sig} clock" is continuously at a high level for a period of time after the moment T6 and the moment T8. "Φ₄ clock" is continuously at a high level for a period of time before the moment T6 in the HCG mode, and continuously at a high level for a period of time before the moment T8 in the LCG mode. Before "Φ₄ clock" before the moment T6 switches from a low level to a high level, "Φ₅ clock" switches from a low level to a continuous high level; and after "Φ_{Sig} clock" output at the moment T6 switches from a high level to a low level, "Φ₅ clock" switches from a high level to a low level. Only after "Φ₅ clock" switches from the high level to the low level, "Φ₆ clock" switches from a low level to a high level, and switches from the high level to a low level before the moment T7.

In the foregoing implementation process, when the digital signal (DCGFlag) is 0 (namely, a low level), the clock generator 440 controls, based on the high level output by "Φ₅ clock", the first transmission gate Φ₅ to be conducted, and inputs the digital signal to the D trigger. Secondly, the clock generator 440 cuts off the first transmission gate Φ₅ based on the low level output by "Φ₅ clock", and controls, based on the high level output by "Φ₄ clock", the D trigger to output an inverted signal 1 (namely, a high level) of the second NOT gate N2. Then, the high level output by "Φ_{sig} clock" and the output signal of the D trigger pass through the third AND gate A3 to obtain a high-level control signal of Φ_{sig}. Finally, "Φ₆ clock" outputs a high level to the second transmission gate Φ₆, feeds back an output of the D trigger to the input end of the D trigger, and stores the output in the D trigger after the output passes through the second NOT gate N2. In this manner, the D trigger can be enabled in a timely manner, to ensure that the third AND gate A3 can output an accurate digital signal.

With reference to FIG. 9 and FIG. 11, a process in which the conversion gain selection circuit selects an HCG mode is described as follows:
After the image sensor circuit is powered on, at a moment T1, the driver 410 continuously outputs high levels to the RST, the TG, and the switch for double conversion gain (SDCG), to reset the FD, the PD, and the C_{S}. Duration during which the driver 410 continuously outputs the high levels to the RST, the TG, and the switch for double conversion gain (SDCG) may be set according to an actual reset requirement of a component.

After the reset ends, the driver 410 continuously outputs low levels to the RST and the TG, so that the RST and the TG are cut off, an integration stage is entered, and the pixel unit starts to be exposed. At the same time, the switch for double conversion gain (SDCG) is still in an on state (that is, the pixel unit enters the LCG mode by default).

When a moment T2 is reached, the switch for double conversion gain (SDCG) is still in the on state, and the clock generator 440 outputs a high level to the first transistor Φ_{RL}, so that the first transistor Φ_{RL} is conducted, and the capacitor C_{RL} receives the first voltage signal V_{RL} in the LCG mode. After a period of time, the driver 410 outputs low levels to the first transistor Φ_{RL} and the switch for double conversion gain (SDCG) , so that the first transistor Φ_{RL} is cut off and the switch for double conversion gain (SDCG) is turned off, and the pixel unit enters the HCG mode. Turn-off time of the switch for double conversion gain (SDCG) is later than cut-off time of the first transistor Φ_{RL}.

When a moment T3 is reached, the clock generator 440 continuously outputs a high level to Φ_{RH} for a period of time, so that Φ_{RH} is conducted, and the capacitor C_{RH} receives the second voltage signal V_{RH} in the HCG mode; and then the clock generator 440 continuously outputs a low level to Φ_{RH}, so that Φ_{RH} is cut off.

When a moment T4 is reached, the driver 410 continuously outputs a high level to the TG in the pixel unit for a period of time, so that the TG is conducted, and photo-generated electrons in the PD are transferred to the FD; and then the driver 410 continuously outputs a low level to the TG, so that the TG is cut off.

When a moment T5 is reached, the clock generator 440 outputs a high level to the seventh transistor Φ_{Comp} for a period of time, so that the seventh transistor Φ_{Comp} is conducted, and the third voltage signal V_{SH} at this time (namely, in the HCG mode) is sent to the comparator for comparison with the first reference voltage V_{REF}. If V_{SH} is greater than V_{REF}, there are fewer photo-generated electrons, and the HCG mode is more suitable for a present incident light intensity. In this case, a digital signal (DCGFlag) output from the second output port in the HCG mode is a logic level "0", and is sent to the memory.

When a moment T6 is reached, the control circuit continuously outputs a high level to Φ_{Sig} for a period of time, so that Φ_{sig} is conducted, V_{SH} is stored into C_{sig}, and then a low level is continuously output to Φ_{Sig}.

When a moment T7 is reached, the driver 410 continuously outputs a high level to the SDCG, so that the SDCG is turned on, and the pixel unit is switched to the LCG mode. At the same time, the driver 410 outputs a high level to the TG for a period of time; and after the photo-generated electrons in the PD are transferred to the FD, the driver 410 outputs a low level to the TG, so that the TG is cut off.

When a moment T8 is reached, the control circuit 436 continuously outputs a low level to Φ_{Sig}, so that Φ_{Sig} is cut off, to prevent the voltage V_{SH} that has been stored into C_{sig} from being changed.

When a moment T9 is reached, the driver 410 continuously outputs a low level to the SDCG, so that the SDCG is turned off.

When a moment T10 is reached, the clock generator 440 continuously outputs a high level to Φ₃ for a period of time, and outputs the second voltage signal received by C_{sig}. At the same time, the control circuit 436 continuously outputs a high level to Φ₂ for a period of time, and outputs the third voltage signal received by C_{RH}. After the second voltage signal and the third voltage signal are processed by the subtractor 4344, a result Vₒᵤₜ (namely, V_{RH} - V_{SH}) is output from the first output port.

In the foregoing implementation process, "Φ₂ clock" output by the clock generator 440 is at a high level only at the moment T10, and "Φ₁ clock" is at a low level throughout the process. "Φ_{sig} clock" is at a high level at the moment T6. Duration of each high level and each low level may be adjusted according to an actual requirement of each component. In addition, the foregoing moments may alternatively be preset according to a requirement of each component. For example, high-level duration of a corresponding transistor when each capacitor receives a voltage signal may be obtained by dividing a capacity of each capacitor by a current in a corresponding line. A step performed at the moment T6 may still be performed at the moment T5.

Optionally, when the moment T5 is reached, the clock generator 440 may alternatively continue to output a low level to the seventh transistor Φ_{Comp}, so that the seventh transistor Φ_{Comp} remains in a cut-off state, and then continue to perform processes at the moment T6 and the moment T7. When the moment T8 is reached, the clock generator 440 outputs a high level again to the seventh transistor Φ_{Comp} for a period of time, so that the seventh transistor Φ_{Comp} is conducted, and the fourth voltage signal V_{SL} at this time (namely, in the LCG mode) is sent to the comparator for comparison with the second reference voltage V_{ref}. If V_{SL} is greater than V_{ref}, there are fewer photo-generated electrons, and the HCG mode is more suitable for a present incident light intensity. In this case, a digital signal (DCGFlag) output from the second output port in the HCG mode is set to a logic level "0", and is sent to the memory. At the same time, the control circuit continuously outputs a low level to Φ_{Sig}, so that Φ_{Sig} is cut off, to prevent the voltage V_{SH} that has been stored into C_{sig} from being changed. Then, a subsequent process continues to be performed.

As shown in FIG. 12, in a process in which the conversion gain selection circuit selects an LCG mode, control timings at moments T1 to T4 are the same as those in FIG. 11. When a moment T5 is reached, the driver 410 outputs a high level to the seventh transistor, so that the seventh transistor Φ_{Comp} is conducted, and the third voltage signal V_{SH} at this time (namely, in the HCG mode) is sent to the comparator for comparison with the first reference voltage V_{REF}. If V_{SH} is less than V_{REF}, there are more photo-generated electrons, and the LCG mode is more suitable for a present incident light intensity. In this case, a digital signal (DCGFlag) output from the second output port in the LCG mode is a logic level "1", and is sent to the memory.

When a moment T6 is reached, the control circuit continuously outputs a low level to Φ_{Sig}, so that Φ_{Sig} is cut off.

When a moment T7 is reached, the driver 410 continuously outputs a high level to the SDCG, so that the SDCG is turned on, and the pixel unit is switched to the LCG mode. At the same time, the driver 410 outputs a high level to the TG for a period of time; and after the photo-generated electrons in the PD are transferred to the FD, the driver 410 continuously outputs a low level to the TG, so that the TG is cut off.

When a moment T8 is reached, the control circuit 436 continuously outputs a high level again to Φ_{Sig} for a period of time, so that Φ_{Sig} is conducted, the third voltage signal V_{SL} is stored into C_{sig}, and then a low level is continuously output to Φ_{Sig}.

When a moment T9 is reached, the driver 410 continuously outputs a low level to the SDCG, so that the SDCG is turned off.

When a moment T10 is reached, the clock generator 440 continuously outputs a high level to Φ₃ for a period of time, and outputs the fourth voltage signal V_{SL} received by C_{sig}. At the same time, the control circuit continuously outputs a high level to Φ₁ for a period of time, and outputs the first voltage signal V_{RL} received by C_{RL}. After the first voltage signal V_{RL} and the fourth voltage signal V_{SL} are processed by the subtractor 4344, a result Vₒᵤₜ (namely, V_{RL} - V_{SL}) is output from the first output port.

Optionally, when the moment T5 is reached, the clock generator 440 may alternatively continue to output a low level to the seventh transistor Φ_{Comp}, so that the seventh transistor Φ_{Comp} remains in a cut-off state, and then continue to perform processes at the moment T6 and the moment T7. When the moment T8 is reached, the clock generator 440 outputs a high level again to the seventh transistor Φ_{Comp} for a period of time, so that the seventh transistor Φ_{Comp} is conducted, and the fourth voltage signal V_{SL} at this time (namely, in the LCG mode) is sent to the comparator for comparison with the second reference voltage V_{ref}. If V_{SL} is less than V_{ref}, there are more photo-generated electrons, and the LCG mode is more suitable for a present incident light intensity. In this case, a digital signal (DCGFlag) output from the second output port in the LCG mode is a logic level "1", and is sent to the memory. At the same time, the control circuit continuously outputs a high level to Φ_{sig} for a period of time, so that Φ_{Sig} is conducted, and the fourth voltage signal V_{SL} is stored into C_{sig}. Then, the control circuit continuously outputs a low level to Φ_{Sig}, so that Φ_{Sig} is cut off, and a subsequent process continues to be performed.

It may be understood that the memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. Through an example rather than a limitative description, random access memories (random access memories, RAMs) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous coupled dynamic random access memory (synchlink DRAM, SLDRAM), and a direct rambus random access memory (direct rambus RAM, DR RAM).

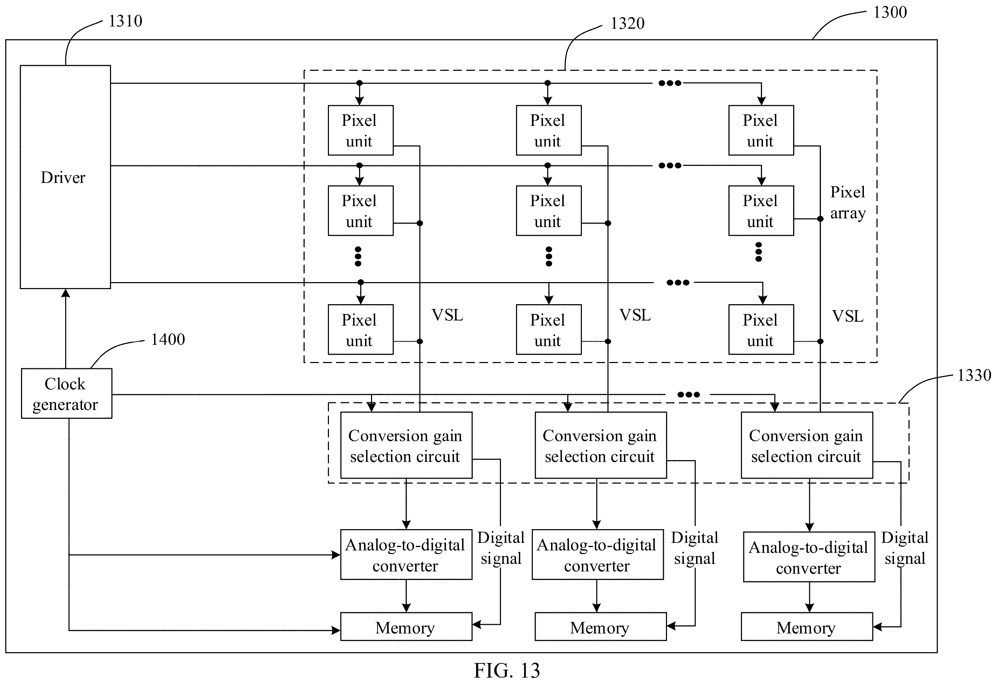

As shown in FIG. 13, an embodiment of this application provides another image sensor circuit 1300. The image sensor circuit includes a driver, a pixel array, and a plurality of conversion gain selection circuits. The pixel array includes a plurality of pixel units that are coupled to the driver and have two conversion gain modes. Pixel units in a same column of the pixel array are coupled to the conversion gain selection circuit through a column bus.

A difference between the image sensor circuit 1300 and the first image sensor circuit 400 provided in embodiments of this application lies in that: The conversion gain selection circuit 1330 is configured to: receive a third voltage signal, and compare a fifth voltage obtained by subtracting the third voltage signal from a second voltage signal with a first reference voltage. When it is determined that the fifth voltage is less than the first reference voltage, the fifth voltage is output as a first analog signal. When it is determined that the fifth voltage is greater than the first reference voltage, a fourth voltage signal is received, and a sixth voltage obtained by subtracting the fourth voltage signal from a first voltage signal is output as a second analog signal. Alternatively, the conversion gain selection circuit 1330 is configured to: receive a fourth voltage signal, and compare a sixth voltage with a second reference voltage. When it is determined that the sixth voltage is greater than the second reference voltage, the sixth voltage is output as a second analog signal. When it is determined that the sixth voltage is less than the second reference voltage, a third voltage signal is received, and a fifth voltage is output as a first analog signal.

In the foregoing implementation process, no feedback line needs to be disposed between the conversion gain selection circuit 1330 and the pixel unit. This reduces cabling difficulty, and avoids crosstalk to a voltage on the column bus (VSL). In addition, the conversion gain circuit1330 and the pixel array 1320 are disposed independently, so that it is more flexible when optimization is performed on the circuit.

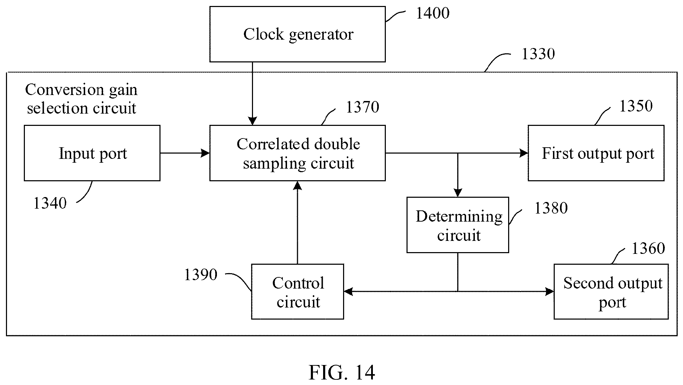

In an implementation solution, as shown in FIG. 14, the conversion gain selection circuit 1330 provided in this embodiment of this application includes an input port 1340, a first output port 1350, a second output port 1360, a correlated double sampling circuit 1370, a determining circuit 1380, and a control circuit 1390. An input end of the correlated double sampling circuit is coupled to the column bus, both an input end of the determining circuit and the first output port are coupled to an output end of the correlated double sampling circuit, both an input end of the control circuit and the second output port are coupled to an output end of the determining circuit, and an output end of the control circuit is further coupled to the correlated sampling circuit. The correlated double sampling circuit 1370 is further separately coupled to the control circuit 1390 and a clock generator 1400, and the input port 1340 is coupled to the column bus (VSL). The correlated double sampling circuit is configured to receive the first voltage signal and the second voltage signal. The correlated double sampling circuit is configured to: receive the third voltage signal, and output the fifth voltage to the determining circuit. The fifth voltage is obtained by subtracting the third voltage signal from the second voltage signal. The determining circuit is configured to: receive the fifth voltage and the first reference voltage, and output a first digital signal or a second digital signal. The control circuit is configured to output a first signal when receiving the first digital signal. The correlated double sampling circuit outputs the first analog signal when receiving the first signal. The control circuit is further configured to output a second signal and a third signal when receiving the second digital signal. The correlated double sampling circuit receives the fourth voltage signal when receiving the second signal. The correlated double sampling circuit outputs the second analog signal when receiving the third signal.

For example, the correlated double sampling circuit 1370 may be controlled, based on a clock signal output by the clock generator 1400, to receive the first voltage signal and the second voltage signal. In addition, the control circuit 1390 controls the correlated double sampling circuit 1370 to receive the third voltage signal or the fourth voltage signal. The control circuit 1390 and the clock generator 1400 may further control the correlated double sampling circuit 1370 to output the fifth voltage or the sixth voltage. The determining circuit 1380 compares the fifth voltage with the first reference voltage. When it is determined that the fifth voltage is less than the first reference voltage, the first digital signal is output. When it is determined that the fifth voltage is greater than the first reference voltage, the second digital signal is output. Alternatively, the determining circuit 1380 compares the sixth voltage with the second reference voltage. When it is determined that the sixth voltage is less than the second reference voltage, the first digital signal is output. When it is determined that the sixth voltage is greater than the second reference voltage, the second digital signal is output. The control circuit 1390 may send the first signal to the correlated double sampling circuit 1370 based on the first digital signal. The correlated double sampling circuit 1370 outputs the second voltage signal when receiving the first signal, and the correlated double sampling circuit 1370 outputs the third voltage signal based on a fourth clock signal input by the clock generator 1400, and obtains the first analog signal by subtracting the third voltage signal from the second voltage signal. Alternatively, the control circuit 1390 may send the second signal and the third signal to the correlated double sampling circuit 1370 based on the second digital signal. The correlated double sampling circuit 1370 receives the fourth voltage signal when receiving the second signal, and outputs the first voltage signal when receiving the third signal. In this case, the correlated double sampling circuit 1370 outputs the fourth voltage signal based on a fifth clock signal sent by the clock generator 1400, and obtains the second analog signal by subtracting the fourth voltage signal from the first voltage signal.

In the foregoing implementation process, the first digital signal and the second digital signal may be stored into a memory coupled to the second output port 1360. The first output port 1350 may be coupled to an analog-to-digital converter (ADC), and the ADC may convert the first analog signal or the second analog signal into a digital signal for subsequent image processing.

In an implementation solution, the determining circuit 1380 includes a reference voltage input end and a comparator U1. An inverting input end of the comparator U1 is coupled to the output end of the correlated double sampling circuit 1370. A non-inverting input end of the comparator U1 is coupled to the reference voltage input end. An output end of the comparator U1 is separately coupled to the input end of the control circuit 1390 and the second output port 1360. In the foregoing manner, the determining circuit 1380 may compare an output voltage of the correlated double sampling circuit 1370 with a given reference voltage at the reference voltage input end, and output a corresponding comparison result.

It may be understood that the comparator U1 may use an independent comparator, or may reuse a comparator inside the analog-to-digital converter.

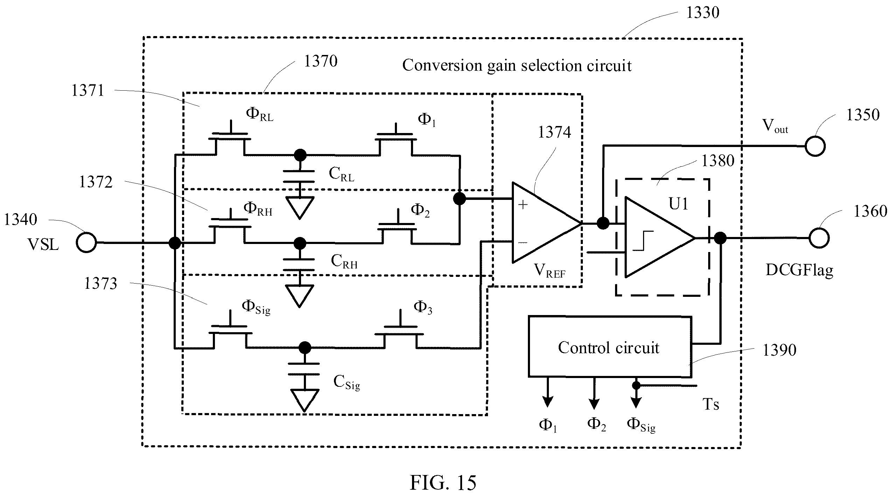

In an implementation solution, as shown in FIG. 15, the correlated double sampling circuit 1370 includes a first voltage receiving circuit 1371, a second voltage receiving circuit 1372, a third voltage receiving circuit 1373, and a subtractor 1374. The first voltage receiving circuit 1371 and the second voltage receiving circuit 1372 are connected in parallel between the input port 1340 and a non-inverting input end of the subtractor 1374. The third voltage receiving circuit 1373 is coupled between the input port 1340 and an inverting input end of the subtractor 1374. An output end of the subtractor 1374 is coupled to the first output port 1350. The first voltage receiving circuit 1371 receives the first voltage signal based on a first clock signal output by the clock generator 1400, and outputs the first voltage signal to the non-inverting input end of the subtractor 1374 based on the third signal output by the control circuit 1390. The second voltage receiving circuit 1372 receives the second voltage signal based on a second clock signal output by the clock generator 1400, and outputs the second voltage signal to the non-inverting input end of the subtractor 1374 based on the first signal output by the control circuit 1390. The third voltage receiving circuit 1373 receives the third voltage signal based on a third clock signal output by the clock generator 1400, and outputs the third voltage signal to the inverting input end of the subtractor 1374 based on the fourth clock signal output by the clock generator 1400. Alternatively, the third voltage receiving circuit 1373 receives the fourth voltage signal based on the second signal output by the control circuit 1390, and outputs the fourth voltage signal to the inverting input end of the subtractor 1374 based on the fifth clock signal output by the clock generator 1400. The subtractor 1374 uses the fifth voltage as the first analog signal, or the subtractor 1374 uses the sixth voltage as the second analog signal.

Further, still as shown in FIG. 15, the first voltage receiving circuit 1371 includes a first transistor Φ_{RL}, a second transistor Φ₁, and a first capacitor C_{RL}. A control electrode of the first transistor Φ_{RL} is coupled to the clock generator 1400, and is configured to input the third clock signal. A first electrode of the first transistor Φ_{RL} is coupled to the input port 1340. Both a second electrode of the first transistor Φ_{RL} and a first end of the first capacitor C_{RL} are coupled to a first electrode of the second transistor Φ₁. A second end of the first capacitor C_{RL} is grounded. A control electrode of the second transistor Φ₁ is coupled to the control circuit 1390, and is configured to input the third signal. A second electrode of the second transistor Φ₁ is coupled to the non-inverting input end of the subtractor 1374.

The second voltage receiving circuit 1372 includes a third transistor Φ_{RH}, a fourth transistor Φ₂, and a second capacitor C_{RH}. A control electrode of the third transistor Φ_{RH} is coupled to the clock generator 1400, and is configured to input the second clock signal. A first electrode of the third transistor Φ_{RH} is coupled to the input port 1340. Both a second electrode of the third transistor Φ_{RH} and a first end of the second capacitor C_{RH} are coupled to a first electrode of the fourth transistor Φ₂. A second end of the second capacitor C_{RH} is grounded. A control electrode of the fourth transistor Φ₂ is coupled to the control circuit 1390, and is configured to input the first signal. A second electrode of the fourth transistor Φ₂ is coupled to the non-inverting input end of the subtractor 1374.

The third voltage receiving circuit 1373 includes a fifth transistor Φ_{Sig}, a sixth transistor Φ₃, a clock signal input port Ts, and a third capacitor C_{sig}. A control electrode of the fifth transistor Φ_{sig} is separately coupled to the control circuit 1390 and the clock signal input port Ts, and is configured to input the second signal output by the control circuit 1390 or input the third clock signal input by the clock generator 1400 through the clock signal input port Ts. A first electrode of the fifth transistor Φ_{sig} is coupled to the input port 1340. Both a second electrode of the fifth transistor Φ_{sig} and a first end of the third capacitor C_{sig} are coupled to a first electrode of the sixth transistor Φ₃. A second end of the third capacitor C_{sig} is grounded. A control electrode of the sixth transistor Φ₃ is coupled to the clock generator 1400, and is configured to input the fourth clock signal or the fifth clock signal. A second electrode of the sixth transistor Φ₃ is coupled to the inverting input end of the subtractor 1374.

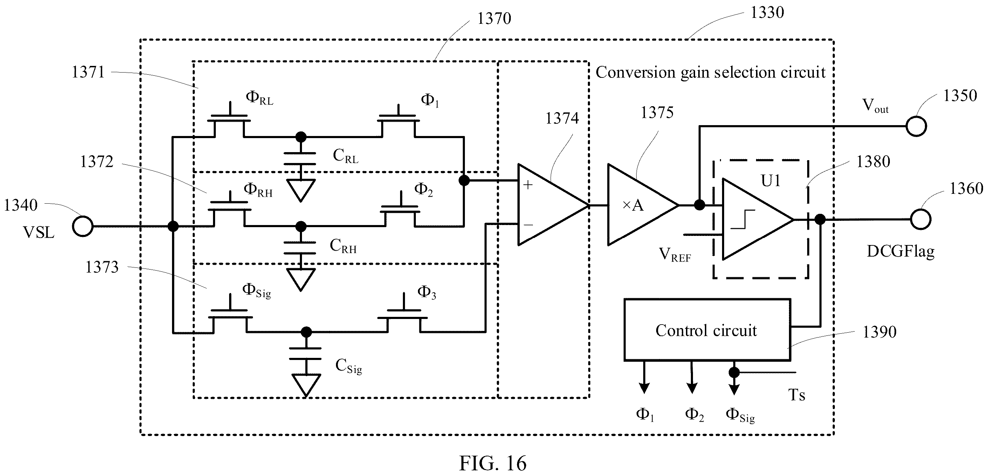

Optionally, as shown in FIG. 16, a gain amplifier 1375 may be further disposed in the conversion gain selection circuit 1330. An input end of the gain amplifier 1375 is coupled to the output end of the subtractor 1374, and an output end of the gain amplifier 1375 is separately coupled to the input end of the determining circuit 1380 and the first output port 1350. An output voltage may be amplified by the gain amplifier 1375, and then sent to the ADC for processing.

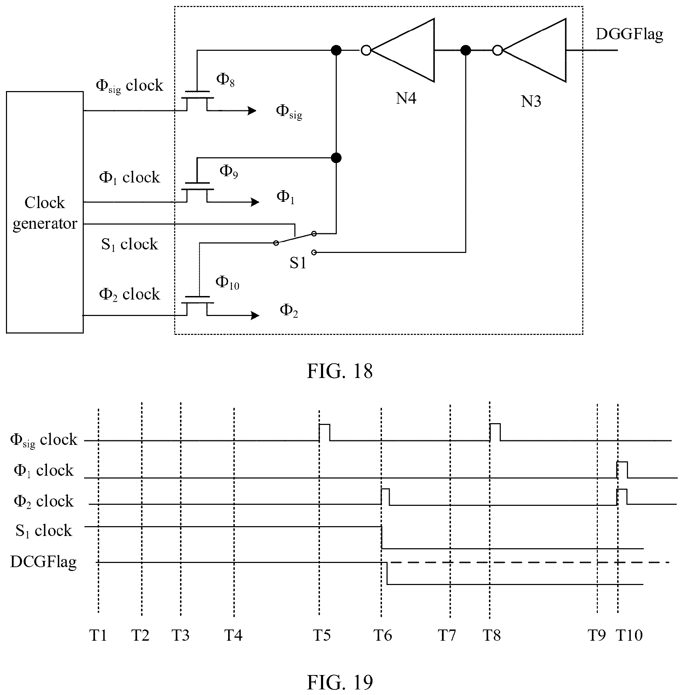

In an implementation, FIG. 18 shows the control circuit 1390 inside the conversion gain selection circuit in the second image sensor circuit provided in this embodiment of this application. The control circuit 1390 includes a third inverter N3, a fourth inverter N4, a switch S1, an eighth transistor Φ₈, a ninth transistor Φ₉, and a tenth transistor Φ₁₀. An input end of the third inverter N3 is connected to the output end of the determining circuit. An input end of the fourth inverter N4 is connected to an output end of the third inverter N3. Both a control electrode of the eighth transistor Φ₈ and a control electrode of the ninth transistor Φ₉ are connected to an output end of the fourth inverter N4. A control electrode of the tenth transistor Φ₁₀ is separately connected to the output end of the third inverter N3 and the output end of the fourth inverter N4 through the switch S1. A first electrode of the eighth transistor Φ₈, a first electrode of the ninth transistor Φ₉, and a first electrode of the tenth transistor Φ₁₀ are all connected to the clock generator. A second electrode of the eighth transistor Φ₈ is connected to the control electrode of the fifth transistor Φ_{sig}. A second electrode of the ninth transistor Φ₉ is connected to the control electrode of the second transistor Φ₁. A second electrode of the tenth transistor Φ₁₀ is connected to the control electrode of the fourth transistor Φ₂.

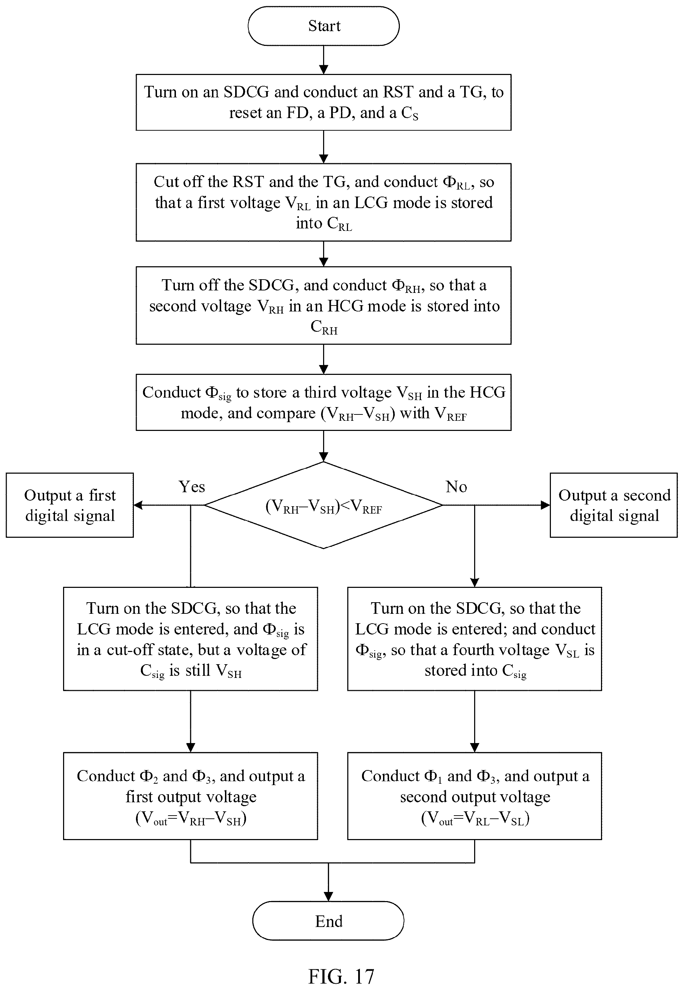

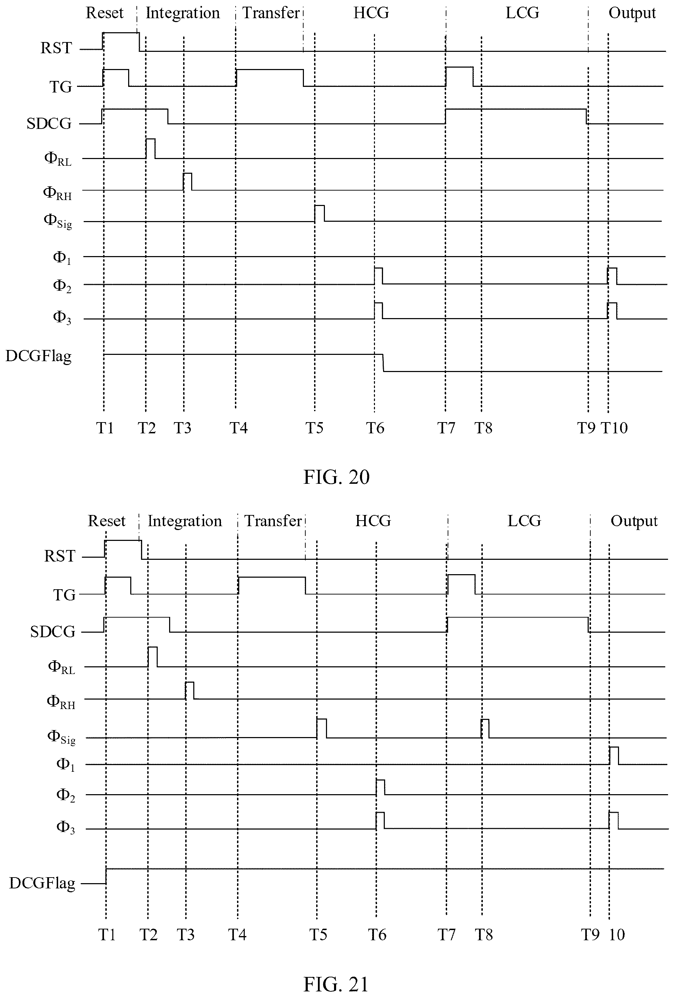

To facilitate understanding of the technical solutions of this application, in this embodiment of this application, a process of selecting a conversion gain mode of the image sensor circuit is briefly described by using the pixel array 1320 including pixel units in FIG. 13 as an example. FIG. 17 shows a working process of the image sensor circuit. FIG. 19 is a timing diagram of the control circuit. FIG. 20 shows a corresponding timing when the conversion gain selection circuit selects an HCG mode. FIG. 21 shows a corresponding timing when the conversion gain selection circuit selects an LCG mode. In FIG. 19 to FIG. 21, each running phase of the pixel unit is represented between two vertical dotted lines, including reset (reset), integration (integration), transfer (transfer), an HCG mode, an LCG mode, output (output), and the like.

With reference to FIG. 17 and FIG. 20, a process in which the conversion gain selection circuit selects an HCG mode is described as follows:
After the image sensor circuit is powered on, at a moment T1, the driver 1310 continuously outputs high levels to the RST, the TG, and the switch for double conversion gain (SDCG), to reset the FD, the PD, and the C_{S}. Duration during which the driver 1310 continuously outputs the high levels to the RST, the TG, and the switch for double conversion gain (SDCG) may be set according to an actual reset requirement of a component.

After the reset ends, the driver 1310 continuously outputs low levels to the RST and the TG, so that the RST and the TG are cut off, an integration stage is entered, and the pixel unit starts to be exposed. At the same time, the switch for double conversion gain (SDCG) is still in an on state (that is, the pixel unit enters the LCG mode by default).

When a moment T2 is reached, the SDCG is still in the on state, and the clock generator 1400 outputs a high level to the first transistor Φ_{RL}, so that the first transistor Φ_{RL} is conducted, and the capacitor C_{RL} receives the first voltage signal V_{RL} in the LCG mode. After a period of time, the driver 1310 outputs low levels to the first transistor Φ_{RL} and the SDCG, so that the first transistor Φ_{RL} is cut off and the switch for double conversion gain (SDCG) is turned off, and the pixel unit enters the HCG mode.

When a moment T3 is reached, the clock generator 1400 continuously outputs a high level to Φ_{RH} for a period of time, so that Φ_{RH} is conducted, and the capacitor C_{RH} receives the second voltage signal V_{RH} in the HCG mode; and then the clock generator 1400 continuously outputs a low level to Φ_{RH}, so that Φ_{RH} is cut off.

When a moment T4 is reached, the pixel unit is still in the HCG mode, and the driver 1310 continuously outputs a high level to the TG in the pixel unit for a period of time, so that the TG is conducted, and photo-generated electrons in the PD are transferred to the FD; and then the driver 1310 continuously outputs a low level to the TG, so that the TG is cut off.

When a moment T5 is reached, the control circuit 1390 continuously outputs a high level to Φ_{Sig} for a period of time, so that Φ_{Sig} is conducted, V_{SH} is stored into C_{sig}, and then a low level is continuously output to Φ_{Sig}.

When a moment T6 is reached, the clock generator 1400 continuously outputs a high level to Φ₃ for a period of time, and outputs the third voltage signal received by C_{sig}. At the same time, the control circuit 1390 continuously outputs a high level to Φ₂ for a period of time, and outputs the second voltage signal received by C_{RH}. The comparator compares a result Vₒᵤₜ (namely, V_{RH} - V_{SH}) output by the subtractor with V_{REF}. If V_{RH} - V_{SH} is less than V_{REF}, there are fewer photo-generated electrons, and the HCG mode is more suitable for a present incident light intensity. In this case, a digital signal (DCGFlag) output from the second output port in the HCG mode is set to a logic level "0", and is sent to the memory.

When a moment T7 is reached, the driver 1310 continuously outputs a high level to the SDCG, and the pixel unit is switched to the LCG mode. At the same time, the driver 1310 outputs a high level to the TG for a period of time; and after the photo-generated electrons in the PD are transferred to the FD, the driver 1310continuously outputs a low level to the TG, so that the TG is cut off.

When a moment T8 is reached, the control circuit 1390 continuously outputs a low level to Φ_{Sig}, so that Φ_{Sig} is cut off, to prevent the voltage V_{SH} that has been stored into C_{sig} from being changed.

When a moment T9 is reached, the driver 1310 continuously outputs a low level to the SDCG.

When a moment T10 is reached, the clock generator 1400 continuously outputs a high level to Φ₃ for a period of time, and outputs the second voltage signal V_{RH} received by C_{sig}. At the same time, the control circuit continuously outputs a high level to Φ₂ for a period of time, and outputs the third voltage signal V_{SH} received by C_{RH}. After the second voltage signal V_{RH} and the third voltage signal V_{SH} are processed by the subtractor 1374, a result Vₒᵤₜ (namely, V_{RH} - V_{SH}) is output from the first output port.

As shown in FIG. 21, in a process in which the conversion gain selection circuit 1330 selects an LCG mode, control timings at moments T1 to T5 are the same as those in FIG. 12. When a moment T6 is reached, the clock generator 1400 continuously outputs a high level to Φ₃ for a period of time, and outputs the third voltage signal received by C_{sig}. At the same time, the control circuit continuously outputs a high level to Φ₂ for a period of time, and outputs the second voltage signal received by C_{RH}. The comparator compares a result Vₒᵤₜ (namely, V_{RH} - V_{SH}) output by the subtractor with V_{REF}. If V_{RH} - V_{SH} is greater than V_{REF}, there are more photo-generated electrons, and the LCG mode is more suitable for a present incident light intensity. In this case, a digital signal (DCGFlag) output from the second output port in the LCG mode is set to a logic level "1", and is sent to the memory.

When a moment T7 is reached, the driver 1310 continuously outputs a high level to the SDCG, and the pixel unit is switched to the LCG mode. At the same time, the driver 1310 outputs a high level to the TG for a period of time; and after the photo-generating electrons in the PD are transferred to the FD, the driver 1310 continuously outputs a low level to the TG, so that the TG is cut off.

When a moment T8 is reached, the control circuit outputs a high level to Φ_{Sig} for a period of time, so that Φ_{sig} is conducted, and the fourth voltage signal V_{SL} is stored into C_{sig}.

When a moment T9 is reached, the driver 1310 continuously outputs a low level to the SDCG.

When a moment T10 is reached, the clock generator 1400 continuously outputs a high level to Φ₃ for a period of time, and outputs the fourth voltage signal V_{SL} received by C_{sig}. At the same time, the control circuit continuously outputs a high level to Φ₁ for a period of time, and outputs the first voltage signal received by C_{RL}. After the first voltage signal and the fourth voltage signal are processed by the subtractor 1374, a result Vₒᵤₜ (namely, V_{RL} - V_{SL}) is output from the first output port.

In the foregoing implementation process, a step performed at the moment T6 may still be performed at the moment T5. It may be understood that the memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. Through an example rather than a limitative description, random access memories (random access memories, RAMs) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous coupled dynamic random access memory (synchlink DRAM, SLDRAM), and a direct rambus random access memory (direct rambus RAM, DR RAM).

In an implementation solution, an embodiment of this application further provides an image sensor chip. The image sensor chip includes any one of the foregoing image sensor circuits packaged in a package structure.

An embodiment of this application further provides a camera device. The camera device includes the image sensor chip.

The foregoing descriptions about implementations allow a person skilled in the art to understand that, for the purpose of convenient and brief description, division into the foregoing functional modules is only taken as an example for illustration. During actual application, the foregoing functions can be allocated to different functional modules and implemented according to a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or the units is merely logical function division and may be other division during actual implementation. For example, a plurality of units or components may be combined or integrated into another apparatus, or some features may be ignored or not performed. In addition, the displayed or discussed mutual couplings or direct couplings or communication couplings may be implemented through some interfaces. The indirect couplings or communication couplings between the apparatuses or units may be implemented in electronic, mechanical, or other forms.

The units described as separate parts may or may not be physically separate, and parts displayed as units may be one or more physical units, may be located in one place, or may be distributed in different places. Some or all of the units may be selected according to an actual requirement to achieve the objectives of solutions of embodiments.

In addition, functional modules in embodiments of this application may be integrated into one processing unit, or each of the units may exist alone physically, or two or more units are integrated into one unit. The integrated unit may be implemented in a form of hardware, or may be implemented in a form of a software functional unit.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An image sensor circuit, comprising a row driver and a pixel array, wherein the pixel array comprises a plurality of pixel units that are coupled to the driver and that have two conversion gain modes; and further comprising:
a plurality of conversion gain selection circuits, wherein the pixel units in a same column of the pixel array are coupled to the conversion gain selection circuit through a column bus;
the driver is configured to drive the pixel unit to output a plurality of voltage signals in the two conversion gain modes; and
the conversion gain selection circuit is configured to output one analog signal and one digital signal based on the plurality of voltage signals, wherein the digital signal indicates a conversion gain mode of the pixel unit, and the analog signal represents an output voltage corresponding to the conversion gain mode.

2. The image sensor circuit according to claim 1, wherein the pixel unit comprises a photodiode, and a floating diffusion node coupled to the photodiode through a switch;
the driver is configured to: input a low level to the switch, and drive the pixel unit to output a first voltage signal in a low conversion gain mode and output a second voltage signal in a high conversion gain mode;
the driver is further configured to: input a high level to the switch, and drive the pixel unit to output a third voltage signal in the high conversion gain mode and output a fourth voltage signal in the low conversion gain mode; and
the conversion gain selection circuit is configured to: output a first analog signal and a first digital signal, or output a second analog signal and a second digital signal, wherein the first analog signal is obtained by subtracting the third voltage signal from the second voltage signal, and the second analog signal is obtained by subtracting the fourth voltage signal from the first voltage signal; and the first digital signal and the second digital signal are obtained by comparing the third voltage signal with a first reference voltage, or the first digital signal and the second digital signal are obtained by comparing the fourth voltage signal with a second reference voltage, wherein levels of the first digital signal and the second digital signal are opposite.

3. The image sensor circuit according to claim 2, wherein the conversion gain selection circuit comprises a first output port, a second output port, a correlated double sampling circuit, a determining circuit, and a control circuit, wherein both an input end of the correlated double sampling circuit and an input end of the determining circuit are coupled to the column bus, an output end of the correlated double sampling circuit is coupled to the first output port, an output end of the determining circuit is separately coupled to the second output port and an input end of the control circuit, and the correlated double sampling circuit is further coupled to an output end of the control circuit;
the correlated double sampling circuit is configured to receive the first voltage signal and the second voltage signal;
the determining circuit is configured to: receive the third voltage signal and the first reference voltage, and output the first digital signal or the second digital signal; or the determining circuit is further configured to: receive the fourth voltage signal and the second reference voltage, and output the first digital signal or the second digital signal;
the control circuit is configured to send a first signal and a second signal to the correlated double sampling circuit when receiving the first digital signal; in response to the first signal, the correlated double sampling circuit receives the third voltage signal; and in response to the second signal, the correlated double sampling circuit outputs the first analog signal; and
the control circuit is further configured to send a third signal and a fourth signal to the correlated double sampling circuit when receiving the second digital signal; in response to the third signal, the correlated double sampling circuit receives the fourth voltage signal; and in response to the fourth signal, the correlated double sampling circuit outputs the second analog signal.

4. The image sensor circuit according to claim 3, wherein the correlated double sampling circuit comprises a first voltage receiving circuit, a second voltage receiving circuit, a third voltage receiving circuit, and a subtractor, wherein the first voltage receiving circuit and the second voltage receiving circuit are connected in parallel between the column bus and a non-inverting input end of the subtractor, the third voltage receiving circuit is coupled between the column bus and an inverting input end of the subtractor, and an output end of the subtractor is coupled to the first output port;
the first voltage receiving circuit receives the first voltage signal based on an input first clock signal;
the second voltage receiving circuit receives the second voltage signal based on an input second clock signal;
the third voltage receiving circuit receives the third voltage signal based on the first signal; and
the third voltage receiving circuit outputs the third voltage signal based on an input third clock signal, and the second voltage receiving circuit outputs the second voltage signal based on the second signal; and the subtractor outputs the first analog signal based on the second voltage signal and the third voltage signal; or
the third voltage receiving circuit receives the fourth voltage signal based on the third signal;
the third voltage receiving circuit outputs the fourth voltage signal based on an input fourth clock signal, and the first voltage receiving circuit outputs the first voltage signal based on the fourth signal; and the subtractor outputs the second analog signal based on the first voltage signal and the fourth voltage signal.

5. The image sensor circuit according to claim 4, wherein the first voltage receiving circuit comprises a first transistor, a second transistor, and a first capacitor, wherein a control electrode of the first transistor is configured to input the first clock signal, a first electrode of the first transistor is coupled to the column bus, both a second electrode of the first transistor and a first end of the first capacitor are coupled to a first electrode of the second transistor, a second end of the first capacitor is grounded, a control electrode of the second transistor is coupled to the control circuit, and is configured to input the fourth signal, and a second electrode of the second transistor is coupled to the non-inverting input end of the subtractor.

6. The image sensor circuit according to claim 4 or 5, wherein the second voltage receiving circuit comprises a third transistor, a fourth transistor, and a second capacitor, wherein a control electrode of the third transistor is configured to input the second clock signal, a first electrode of the third transistor is coupled to the column bus, both a second electrode of the third transistor and a first end of the second capacitor are coupled to a first electrode of the fourth transistor, a second end of the second capacitor is grounded, a control electrode of the fourth transistor is coupled to the control circuit, and is configured to input the second signal, and a second electrode of the fourth transistor is coupled to the non-inverting input end of the subtractor.

7. The image sensor circuit according to any one of claims 4 to 6, wherein the third voltage receiving circuit comprises a fifth transistor, a sixth transistor, and a third capacitor, wherein a control electrode of the fifth transistor is configured to input the first signal or the third signal, a first electrode of the fifth transistor is coupled to the column bus, both a second electrode of the fifth transistor and a first end of the third capacitor are coupled to a first electrode of the sixth transistor, a second end of the third capacitor is grounded, a control electrode of the sixth transistor is configured to input the third clock signal or the fourth clock signal, and a second electrode of the sixth transistor is coupled to the inverting input end of the subtractor.

8. The image sensor circuit according to any one of claims 3 to 7, wherein the determining circuit comprises a reference voltage input end, a seventh transistor, and a comparator, wherein when a control electrode of the seventh transistor inputs a high level, the comparator receives the third voltage signal or the fourth voltage signal; and a first electrode of the seventh transistor is coupled to the column bus, a second electrode of the seventh transistor is coupled to an inverting input end of the comparator, a non-inverting input end of the comparator is coupled to the reference voltage input end, and an output end of the comparator is separately coupled to the input end of the control circuit and the second output port.

9. The image sensor circuit according to claim 8, wherein the image sensor circuit further comprises an analog-to-digital converter coupled to the first output port, and the comparator is comprised in the analog-to-digital converter.

10. The image sensor circuit according to claim 9, wherein the image sensor circuit further comprises a gain amplifier coupled between the first output port and the analog-to-digital converter.

11. The image sensor circuit according to claim 2, wherein the conversion gain selection circuit comprises a first output port, a second output port, a correlated double sampling circuit, a determining circuit, and a control circuit, wherein an input end of the correlated double sampling circuit is coupled to the column bus, both an input end of the determining circuit and the first output port are coupled to an output end of the correlated double sampling circuit, both an input end of the control circuit and the second output port are coupled to an output end of the determining circuit, and an output end of the control circuit is further coupled to the correlated double sampling circuit;
the correlated double sampling circuit is configured to receive the first voltage signal and the second voltage signal;
the correlated double sampling circuit is further configured to: receive the third voltage signal, and output a fifth voltage to the determining circuit, wherein the fifth voltage is obtained by subtracting the third voltage signal from the second voltage signal;
the determining circuit is configured to: receive the fifth voltage and the first reference voltage, and output the first digital signal or the second digital signal;
the control circuit is configured to output a first signal when receiving the first digital signal; in response to the first signal, the correlated double sampling circuit outputs the first analog signal;
the control circuit is further configured to output a second signal and a third signal when receiving the second digital signal;
in response to the second signal, the correlated double sampling circuit receives the fourth voltage signal; and
in response to the third signal, the correlated double sampling circuit outputs the second analog signal.

12. The image sensor circuit according to claim 11, wherein the correlated double sampling circuit comprises a first voltage receiving circuit, a second voltage receiving circuit, a third voltage receiving circuit, and a subtractor, wherein the first voltage receiving circuit and the second voltage receiving circuit are connected in parallel between the column bus and a non-inverting input end of the subtractor, the third voltage receiving circuit is coupled between the column bus and an inverting input end of the subtractor, and an output end of the subtractor is coupled to the first output port;
the first voltage receiving circuit receives the first voltage signal based on an input first clock signal;
the second voltage receiving circuit receives the second voltage signal based on an input second clock signal; and
the third voltage receiving circuit receives the third voltage signal based on an input third clock signal; the third voltage receiving circuit outputs the third voltage signal based on an input fourth clock signal, and the second voltage receiving circuit outputs the second voltage signal based on the first signal; and the subtractor outputs the first analog signal based on the second voltage signal and the third voltage signal; or
the third voltage receiving circuit receives the fourth voltage signal based on the input second signal; the third voltage receiving circuit outputs the fourth voltage signal based on an input fifth clock signal, and the first voltage receiving circuit outputs the first voltage signal based on the third signal; and the subtractor outputs the second analog signal based on the first voltage signal and the fourth voltage signal.

13. The image sensor circuit according to claim 12, wherein the first voltage receiving circuit comprises a first transistor, a second transistor, and a first capacitor, wherein a control electrode of the first transistor is configured to input the third clock signal, a first electrode of the first transistor is coupled to the column bus, both a second electrode of the first transistor and a first end of the first capacitor are coupled to a first electrode of the second transistor, a second end of the first capacitor is grounded, a control electrode of the second transistor is coupled to the control circuit, and is configured to input the third signal, and a second electrode of the second transistor is coupled to the non-inverting input end of the subtractor.

14. The image sensor circuit according to claim 12 or 13, wherein the second voltage receiving circuit comprises a third transistor, a fourth transistor, and a second capacitor, wherein a control electrode of the third transistor is configured to input the second clock signal, a first electrode of the third transistor is coupled to the column bus, both a second electrode of the third transistor and a first end of the second capacitor are coupled to a first electrode of the fourth transistor, a second end of the second capacitor is grounded, a control electrode of the fourth transistor is coupled to the control circuit, and is configured to input the first signal, and a second electrode of the fourth transistor is coupled to the non-inverting input end of the subtractor.

15. The image sensor circuit according to any one of claims 12 to 14, wherein the third voltage receiving circuit comprises a fifth transistor, a sixth transistor, and a third capacitor, wherein a control electrode of the fifth transistor is configured to input the second signal or the third clock signal, a first electrode of the fifth transistor is coupled to the column bus, both a second electrode of the fifth transistor and a first end of the third capacitor are coupled to a first electrode of the sixth transistor, a second end of the third capacitor is grounded, a control electrode of the sixth transistor is configured to input the fourth clock signal or the fifth clock signal, and a second electrode of the sixth transistor is coupled to the inverting input end of the subtractor.

16. The image sensor circuit according to any one of claims 11 to 15, wherein the determining circuit comprises a reference voltage input end and a comparator, wherein an inverting input end of the comparator is coupled to the output end of the correlated double sampling circuit, a non-inverting input end of the comparator is coupled to the reference voltage input end, and an output end of the comparator is separately coupled to the input end of the control circuit and the second output port.

17. The image sensor circuit according to claim 16, wherein the image sensor circuit further comprises an analog-to-digital converter coupled to the first output port, and the comparator is comprised in the analog-to-digital converter.

18. The image sensor circuit according to claim 17, wherein the conversion gain selection circuit further comprises a gain amplifier, wherein an input end of the gain amplifier is coupled to the output end of the subtractor, and an output end of the gain amplifier is separately coupled to the input end of the determining circuit and the first output port.

19. An image sensor chip, comprising the image sensor circuit, according to any one of claims 1 to 18, packaged in a package structure.

20. A camera device, wherein the camera device comprises the image sensor chip according to claim 19.
